(19) Europäisches Patentamt
European Patent Office
Office européen des brevets

(11) **EP 3 262 140 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **15808125.7**

(22) Anmeldetag: **01.12.2015**

(51) Internationale Patentklassifikation (IPC):
**C10G 1/02** (2006.01)    **C10G 1/10** (2006.01)
**C10G 3/00** (2006.01)    **C10B 53/02** (2006.01)
**C10B 53/07** (2006.01)    **C10B 57/18** (2006.01)
**C10L 1/02** (2006.01)    **C10K 3/02** (2006.01)
**C10C 5/00** (2006.01)    **C10B 53/00** (2006.01)

(52) Gemeinsame Patentklassifikation (CPC):
**C10B 53/02; C10B 53/00; C10B 53/07;**
**C10B 57/18; C10C 5/00; C10G 1/02; C10G 1/10;**
**C10G 3/00; C10K 3/02; C10L 1/02;**
C10G 2300/1003; C10G 2300/1011;
C10G 2300/1014; C10G 2300/1018; C10G 2400/30;

(Forts.)

(86) Internationale Anmeldenummer:
**PCT/EP2015/078143**

(87) Internationale Veröffentlichungsnummer:
**WO 2016/134794 (01.09.2016 Gazette 2016/35)**

(54) **PYROLYSEÖL UND VERFAHREN ZU DESSEN HERSTELLUNG**

PYROLYSIS OIL AND METHOD FOR PRODUCING SAME

HUILE DE PYROLYSE ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2015 DE 102015102819**
**29.05.2015 DE 102015108552**

(43) Veröffentlichungstag der Anmeldung:
**03.01.2018 Patentblatt 2018/01**

(73) Patentinhaber: **Fraunhofer-Gesellschaft zur Förderung**
**der angewandten Forschung e.V.**
**80686 München (DE)**

(72) Erfinder:
• **HORNUNG, Andreas**
**76185 Karlsruhe (DE)**
• **APFELBACHER, Andreas**
**92224 Amberg (DE)**
• **OUADI, Miloud**
**92237 Sulzbach-Rosenberg (DE)**
• **NEUMANN, Johannes**
**91217 Hersbruck (DE)**

(56) Entgegenhaltungen:
WO-A1-03/002691    WO-A1-2015/104430
DD-A5- 119 607    DE-A1- 3 040 227
DE-C1- 19 737 403    US-A1- 2012 117 860
US-A1- 2012 260 563    US-A1- 2013 306 913

• GILBERT P ET AL: "Tar reduction in pyrolysis vapours from biomass over a hot char bed", BIORESOURCE TECHNOLOGY, ELSEVIER BV, GB, Bd. 100, Nr. 23, 1. Dezember 2009 (2009-12-01), Seiten 6045-6051, XP026469520, ISSN: 0960-8524, DOI: 10.1016/J.BIORTECH.2009.06.041 [gefunden am 2009-07-14]

- DOUGLAS C. ELLIOTT ET AL: "Catalytic hydroprocessing of biomass fast pyrolysis bio-oil to produce hydrocarbon products", ENVIRONMENTAL PROGRESS & SUSTAINABLE ENERGY, Bd. 28, Nr. 3, 1. Oktober 2009 (2009-10-01), Seiten 441-449, XP055126165, ISSN: 1944-7442, DOI: 10.1002/ep.10384
- JOHANNES NEUMANN ET AL: "Production and characterization of a new quality pyrolysis oil, char and syngas from digestate - Introducing the thermo-catalytic reforming process", JOURNAL OF ANALYTICAL AND APPLIED PYROLYSIS, vol. 113, 2 December 2014 (2014-12-02), pages 137-142, XP055580473, NL ISSN: 0165-2370, DOI: 10.1016/j.jaap.2014.11.022
- Hornung Andreas: "Chapter 4 - Pyrolysis" In: "Transformation of Biomass: Theory to Practice", 9 July 2014 (2014-07-09), John Wiley & Sons, Ltd., XP055872742, ISBN: 978-1-118-69364-3 pages 99-112, DOI: 10.1002/9781118693643,

(52) Gemeinsame Patentklassifikation (CPC): (Forts.)
Y02E 50/10; Y02P 30/20

**Beschreibung**

Die Erfindung betrifft ein Pyrolyseöl und ein thermokatalytisches Verfahren zu dessen Herstellung, insbesondere aus zumindest teilweise biogenen Ausgangsmaterialien.

Eine Pyrolyse dient der thermischen Umsetzung von kohlenstoffhaltigen Ausgangsmaterialien, beispielsweise Biomasse, in flüssiges Pyrolysekonzentrat (Pyrolyseöl), festen Pyrolysekoks und Pyrolysegas als Pyrolyseprodukte und erfolgt unter Sauerstoffausschluss oder zumindest im Wesentlichen ohne Anwesenheit von Sauerstoff. Die Anteile und die Qualität der Pyrolyseprodukte sind einerseits durch die Wahl des Ausgangsmaterials (und insbesondere auch durch dessen Restfeuchte), vor allem aber durch die vorherrschenden Verfahrensbedingungen beeinflussbar. Hierbei sind insbesondere die Pyrolysetemperatur, die Verweilzeit in der Pyrolysezone und gegebenenfalls erfolgende Nachbearbeitungsschritte zu nennen.

Die Pyrolyse stellt also ein Verfahren dar, bei dem unter spezifischen Bedingungen ohne Gegenwart von Sauerstoff bei Temperaturen zwischen 250 und 1050°C die vorstehend genannten Pyrolyseprodukte für ein breites Anwendungsspektrum hergestellt werden können. Bei der Pyrolyse unterscheidet man zwischen der schnellen Pyrolyse (flash und fast pyrolysis) und der langsamen Pyrolyse (slow pyrolysis), die im Wesentlichen abhängig von der Aufheizrate des eingestellten Ausgangsmaterials ist. Daneben existiert auch noch die sogenannte intermediäre Pyrolyse im mittleren Temperaturbereich bei mittleren Verweilzeiten (beispielsweise in der WO 2010/130988 A1 offenbart). Jeder dieser verschiedenen Pyrolysetypen kann auch dadurch charakterisiert werden in welchem Umfang mit dem Pyrolyseverfahren Feststoffe, Gase und Flüssigkeiten (und hier wiederum wässrige und organische Phasen) gebildet werden.

Mit der schnellen Pyrolyse werden große Mengen kondensierbarer organischer Flüssigkeiten erhalten. Diese Öle enthalten eine Vielzahl organischer Verbindungen (wie Alkohole, Zucker, Furane, Phenole, andere aromatische Verbindungen, Ketone, Carbonsäuren und Wasser). Wird ein biogenes Ausgangsmaterial eingesetzt, so gehen diese Komponenten insbesondere auf die Zersetzung der darin enthaltenen Cellulose-, Hemicellulose- und Lignin-Derivate zurück. Die gebildeten Öle sind Feststoffen überlegen, insbesondere aufgrund ihrer höheren Energiedichte und der einfacheren Lager- und Transportfähigkeit.

Allerdings haben die mittels der schnellen Pyrolyse erzeugten Pyrolyseöle den Nachteil, dass sie nicht für Kraftstoffe zum Betrieb von Kraftfahrzeugmotoren geeignet sind. Die erzeugten Pyrolyseöle weisen einen sehr hohen Sauerstoffgehalt auf, was sie instabil und anfällig gegen Alterungseffekte (wie Polymerisation) macht. Ferner sind die erhaltenen Öle sehr viskos (aufgrund eines hohen Gehalts an Oligomeren und Verbindungen mit hohen Molekulargewichten) und außerdem korrosiv (aufgrund der Anwesenheit von Säuren). Schließlich ist der Wassergehalt dieser Öle größer als 25 Gew.-%. Dies führt zu einer schlechten Mischbarkeit mit herkömmlichen Kraftstoffen wie Benzin oder Diesel, einem verminderten Heizwert und schlechten Verbrennungseigenschaften.

Die langsame Pyrolyse wird seit Jahrzehnten zur Kohleherstellung genutzt. Hier beträgt die Verweilzeit des zu pyrolysierenden Materials in der Pyrolysezone Stunden bis Tage. Es wird Ausgangsmaterial mit einem niedrigen Feuchtegehalt kleiner 25 % eingesetzt, insbesondere Holz. Für andere Biomaterialen als Ausgangsstoffe ist das Verfahren nicht oder nur schlecht geeignet.

Neben der schnellen und der langsamen Pyrolyse kann die intermediäre Pyrolyse im mittleren Temperaturbereich bei mittleren Verweilzeiten verwendet werden. Die WO 2010/130988 A1 offenbart ein derartiges Verfahren, bei dem abhängig vom Partikeldurchmesser des eingesetzten Ausgangsmaterials die Verweilzeit mehrere Minuten betragen kann. Die Pyrolyse führt hier zu Produkten, bei denen der Teergehalt reduziert ist. Allerdings ist auch hier das Problem der mangelnden Eignung als Kraftstoff für Fahrzeuge gegeben.

In S. Ren et al. (RSC Adv., 2014, 4, 10731) wird ein Verfahren zur Mirkowellenpyrolyse von Pellets aus Sägespänen beschrieben, das in Gegenwart eines Katalysators erfolgt, der seinerseits aus biogenen Ausgangsmaterialien erhalten wurde. Die dabei erhaltenen Pyrolyseöle weisen allerdings hohe Gehalte an Sauerstoff auf, insbesondere in Form von Zuckern, Guajacolen und Phenolen.

P. Gilbert et al: "Tar reduction in pyrolysis vapours from biomass over a hot char bed", Bioresource Technology, Elsevier BV, Bd. 100, Nr. 23, 1. Dezember 2009, Seiten 6045-6051, XP026469520 offenbart ein Pyrolyseverfahren, bei dem zunächst Biomasse pyrolysiert wird. Um den Teergehalt in den gebildeten Dämpfe zu vermindern, werden die Dämpfe einer bei erhöhten Temperaturen betriebenen tar cracking zone zugeführt, welche Holzkohle enthält.

In der auf die Anmelderin zurückgehenden Veröffentlichung J. Neumann et al:" Production and characterization of a new quality pyrolysis oil, char and syngas from digestate - Introducing the thermo-catalytic reforming process", Journal of Analytical and Applied Pyrolysis, Bd. 113, 2. Dezember 2014, Seiten 137 - 142, XP055580473 wird eine intermediäre Pyrolyse von Gärresten beschrieben. Nach erfolgter Pyrolyse werden die gebildeten Zwischenprodukte einem bei erhöhten Temperaturen betriebenen Reformer zugeführt, wo ein Reforming zwischen Kohle, Dampf und Gasen stattfindet, wobei eine Aufwertung aller Phasen erfolgt.

Der vorliegenden Erfindung liegt daher die Aufgabe zugrunde, die Pyrolyseöle nach dem Stand der Technik und die Verfahren zu deren Herstellung zu verbessern und insbesondere ein Verfahren und eine hierfür geeignete Vorrichtung anzugeben, mit dem Pyrolyseöle erhalten werden, die für den Einsatz in Kraftfahrzeugmotoren, Stationärmotoren und Gasmotoren geeignet sind. Weitere Aufgaben sind die Verbesserung der bestehenden Pyrolyseverfahren und der damit hergestellten Pyrolyseöle im Hinblick auf Heizwert, Viskosität, Korrosivität, Sauerstoff-Gehalt, Schwefel-Gehalt und/oder Wassergehalt der Pyrolyseöle.

Zumindest eine dieser Aufgaben wird durch das Verfahren zur Herstellung eines Pyrolyseöls und das Pyrolyseöl gemäß den unabhängigen Ansprüchen gelöst. Unteransprüche, die nachfolgende Beschreibung und die Beispiele lehren vorteilhafte Weiterbildungen.

Ein Verfahren zur Herstellung eines Pyrolyseöls umfasst folgende Schritte:

A) Zunächst wird ein zu behandelndes Ausgangsmaterial einer Pyrolysezone eines Reaktors zugeführt und dort bei einer Temperatur von 250°C bis 700°C (gemessene Materialtemperatur an der inneren Oberfläche der Reaktorwand des Pyrolysereaktors) pyrolysiert, wobei die Verweilzeit des zu pyrolysierenden Materials in der Pyrolysezone 1 Sekunde bis 1 Stunde beträgt. Das am Ende der Pyrolysezone erhaltene Material wird "pyrolysiertes Material" genannt. Das pyrolysierte Material umfasst pyrolysierte Feststoffe und Pyrolysedämpfe.

B) Zumindest die Pyrolysedämpfe werden dann einer Nachkonditionierungszone zugeführt, in der die Pyrolysedämpfe bei einer Temperatur von 500°C bis 800°C mit einer Katalysatorschüttung in Kontakt gebracht werden, wobei (neben den nichtkondensierbaren Pyrolysegasen) das Pyrolyseöl gebildet wird. Als Katalysator wird dabei pyrolysierter Feststoff eingesetzt, wie er aus dem vorstehend beschriebenen Verfahrensschritt A) hervorgeht. Der Katalysator wird dabei "in situ" eingesetzt.

C) Schließlich wird das Pyrolyseöl von weiteren gebildeten Pyrolyseprodukten in einer Separationseinheit abgetrennt. Insbesondere kann hierbei eine Trennung des Pyrolyseöls von einer ebenfalls gebildeten wässrigen Phase erfolgen.

Verfahrensschritt A) kann also eine schnelle Pyrolyse oder eine intermediäre Pyrolyse sein. Insbesondere wird die Temperatur dieser Pyrolyse 300°C bis 600°C und häufig 400 bis 500°C betragen. Die Verweilzeit kann - wie erläutert - grundsätzlich 1 Sekunde bis 1 Stunde betragen, insbesondere aber 5 Sekunden bis 30 Minuten und - bei Durchführung einer intermediären Pyrolyse häufig 3 Minuten bis 10 Minuten.

Unter Verweilzeit in der Pyrolysezone wird anmeldungsgemäß die mittlere Verweilzeit des Feststoffanteils verstanden, den ein Feststoffteilchen (zum Beispiel ein Pellet) vom Eintritt in die Pyrolysezone bis zum Austritt benötigt. Der Beginn der Pyrolysezone ist dabei definiert durch das Erreichen der minimalen Pyrolysetemperatur von 250 °C im Pyrolysegut/Ausgangsmaterial und das Ende der Pyrolysezone bildet der Übergang zur Nachkonditionierungszone. Üblicherweise wird dies mit dem Ende eines in der Pyrolysezone verwendeten Transportmittels, zum Beispiel einer Förderschnecke, einhergehen. Ferner ist es schließlich auch so, dass das Ende der Pyrolysezone dann erreicht ist, wenn die Pyrolysedämpfe von den Feststoffen getrennt werden, um die Dämpfe durch eine aus den pyrolysierten Feststoffen gebildeten (oder herstellbaren) Katalysatorschüttung zu leiten. Die Verweilzeit in der Pyrolysezone wird dabei mittels eines Referenzverfahrens an einem maßstabsgetreuen Plexiglas-Kaltmodell ermittelt (das der erfindungsgemäßen Modell bis auf die Materialien, aus denen die Pyrolysezone der thermokatalytischen Anlage gebildet ist, und die Beheizungseinrichtung nachgebildet ist (insbesondere im Hinblick etwaige Fördermittel). Als "Ausgangsmaterial" finden Holzpellets der Größenklasse D25 mit einer Länge von 20 mm bis 30 mm Verwendung. Zunächst werden handelsübliche Holzpellets durch ein Kaltmodel geführt. Nachdem die gesamte Pyrolysezone mit Holzpellets gefüllt sind, wird eine Charge von 25 eingefärbten Holzpellets zugegeben und die Zeit jedes einzelnen der eingefärbten Pellets gemessen, die dieses vom Eintritt bis zum Austritt aus der Pyrolysezone benötigt. Die mittlere Verweilzeit kann direkt optisch gemessen werden (insbesondere, wenn dies aufgrund des Verhältnisses von Reaktordurchmesser und Pelletgröße möglich ist). Bei größeren Reaktoren (die eine rein optische Detektion nicht zulassen) oder wenn die Bereitstellung eines Plexiglasmodells zu aufwendig ist, kann die Verweilzeit auch direkt am Reaktor bestimmt werden, indem die Zeit jedes einzelnen Pellets gemessen wird, die vom Eintritt in die in den Reaktor bis zum Austritt aus der Pyrolysezone bestimmt wird und die (konstante) Durchtrittszeit durch die vor der Pyrolysezone angeordneten etwaigen weiteren Anlagenbereiche hiervon abgezogen wird. Die Mittlere Verweilzeit $\bar{t}$ ergibt sich mit dem Quotienten aus Summe der Verweilzeiten $t_i$ durch Anzahl der gefärbten Pellets, wobei zwei Durchläufe des genannten Referenzverfahrens erfolgen:

$$\bar{t} = \frac{\sum_{i=1}^{n} t_i}{n}$$

Gemäß einer Ausführungsform kann die Pyrolysezone für das erfindungsgemäße Verfahren nach Art eines mehrstufigen Schnecken- oder Drehrohrreaktors ausgebildet sein. Allgemeiner ausgedrückt weist die Pyrolysezone üblicherweise Fördermittel zum Transport des Ausgangsmaterials bzw. des Pyrolyseguts auf, wobei insbesondere Förderschnecken, Förderspiralen und/oder Bandförderer zu nennen sind.

Wesentlich für die Bildung der hochwertigen erfindungsgemäßen Pyrolyseöle ist aber nicht der Pyrolyseschritt A), der - wie den vorstehenden Ausführungen zu entnehmen ist - grundsätzlich mit jeglicher schnellen oder intermediären Pyrolyse durchgeführt werden kann, sondern der Nachkonditionierungsschritt B). Dieser Nachkonditionierungsschritt wird aufgrund der Veredelung der Pyrolysedämpfe auch Reforming genannt. Das Reforming der Pyrolysedämpfe erfolgt mittels Kontaktierung mit einer Katalysatorschüttung, wobei der Katalysator mit dem vorstehenden Pyrolyseschritt A) erhältlich ist. Die Kontaktierung der Pyrolysedämpfe mit der Katalysatorschüttung kann dabei erfolgen, indem die Pyrolysedämpfe durch die Schüttung hindurchgeleitet werden, da dann ein besonders intensiver Kontakt realisierbar ist. Die Nachkonditionierung bzw. das Reforming erfolgt bei einer Temperatur von 500 bis 800°C und insbesondere 600 bis 700°C. Temperaturen über etwa 700 bis 750°C sind aus wirtschaftlicher Sicht häufig weniger vorteilhaft, während Temperaturen unter 500°C häufig zu qualitativ weniger hochwertigen Produkten führen. Besonders hochwertige Produkte erhält man für die meisten Ausgangsmaterialien im Temperaturfenster zwischen 650 und 750°C.

Das erfindungsgemäße Verfahren wird so durchgeführt, dass die Temperatur der Nachkonditionierung in Schritt B) höher ist als die der Pyrolyse in Schritt A). Im Regelfall wird die Temperatur mindestens 50°C höher sein, häufig mindestens 100°C höher. Dies liegt darin begründet, dass in den meisten Fällen die Qualität der gebildeten Pyrolyseöle bei Durchführung der Reformierung gemäß Schritt B) bei Temperaturen oberhalb von 600°C verbessert wird, während die Pyrolyse gemäß Schritt A), allein schon aus wirtschaftlichen Gründen, häufig bei Temperaturen erfolgt, die mindestens 100°C unter diesem Wert liegen. Im Einzelfall, insbesondere bei Verwendung von kontinuierlich betriebenen Festbettreaktoren, bei denen die Pyrolysezone und die Nachkonditionierungszone fließend ineinander übergehen, kann auch die Temperatur in Schritt A) und in Schritt B) etwa gleich hoch sein und beispielsweise zwischen 600 und 650 °C liegen.

Mit dem vorstehend beschriebenen Verfahren können die nachfolgend noch näher beschriebenen hochwertigen Pyrolyseöle hergestellt werden und zwar in einer Qualität, wie sie bislang nach dem Stand der Technik nicht erhältlich war. Ohne hierauf beschränkt werden zu wollen, wird dies insbesondere durch die während Schritt B) erfolgende Desoxygenierung der Pyrolysedämpfe erklärt. Die erhaltenen Öle weisen einen niedrigeren Sauerstoffgehalt, einen hohen Heizwert, eine niedrige Viskosität, eine niedrige Säurezahl und einen geringen Wassergehalt auf. Ferner sind sie weitgehend unzersetzt destillierbar und weisen auch keine Alterungseffekte wie die Pyrolyseöle nach dem Stand der Technik auf.

Neben den beiden Schritten A) und B) können natürlich weitere Schritte bei dem erfindungsgemäßen Verfahren enthalten sein, insbesondere eine Vorkonditionierung, bei der das Ausgangsmaterial bereits auf eine Temperatur erwärmt wird, die unter der der Pyrolysezone des Schrittes A) liegt. Daneben können natürlich weitere Nachkonditionierungsschritte, beispielsweise Nachkonditionierungsschritte mit anderen Katalysatoren oder ohne Katalysatoren bei erhöhten Temperaturen oder auch eine Hydrierung mit dem ebenfalls in der Pyrolyse erhaltenen Wasserstoffgas bzw. Synthesegas erfolgen. Ferner kann bei Ausgangsmaterialien, die zu einem erhöhten Wassergehalt im Pyrolyseöl führen, auch mittels Methoden, die dem Fachmann beispielsweise aus der Biodieselherstellung bekannt sind, der Wassergehalt des Pyrolyseöls vermindert werden. Schließlich kann auch eine Nachkonditionierung der erhaltenen Pyrolyseöle mittels einer Destillation oder einer fraktionierten Kondensation stattfinden. Durch eine zusätzliche Nachkonditionierung kann insbesondere der Sauerstoffgehalt, die Viskosität, und die Säurezahl weiter vermindert werden der Heizwert weiter erhöht werden. Wesentlich für die Qualität der erhaltenen Pyrolyseöle ist allerdings - wie bereits ausgeführt - insbesondere der Nachkonditionierungsschritt B).

Gemäß einer Ausführungsform werden in Schritt C) die erhaltenen Pyrolyseöle einer Destillationseinheit zugeführt. Häufig wird diese Destillation bei vermindertem Druck erfolgen, beispielsweise bei weniger als 200 hPa. Durch die Destillation kann im Regelfall auch der Schwefelgehalt erniedrigt werden und die Säurezahl weiter vermindert werden. Außerdem wird aufgrund der Abtrennung von Schwerölen und dergleichen ein Öl mit einer deutlich geringeren Viskosität erhalten.

Gemäß einer weiteren Ausführungsform werden die nach Schritt B) oder C) erhaltenen Pyrolyseprodukte einem Hydrierungsschritt (oder einer Hydrodeoxygenierung), insbesondere einer katalytischen Hydrierung, zugeführt. Die hierfür erforderlichen Reaktoren, Reaktionsbedingungen und Katalysatoren sind dem Fachmann bekannt. Durch die Hydrierung kann der Schwefelgehalt und die Säurezahl sehr stark vermindert werden. Auch der Sauerstoff-, der Stickstoff- und der Wasser-Gehalt werden deutlich reduziert.

Gemäß einer Ausführungsform werden als Ausgangsmaterialien zumindest teilweise biogene Materialien eingesetzt, da dann das erfindungsgemäße Verfahren seine Vorteile besonders gut ausspielen kann. Häufig wird man im Wesentlichen vollständig biogene Materialien einsetzen, insbesondere vor dem Hintergrund, biologisch basierte Kraftstoffe herzustellen. Zudem eignen sich für die Herstellung der im Verfahrensschritt B) eingesetzten Katalysatoren insbesondere die biogenen Ausgangsmaterialien. Unter biogen ist in diesem Zusammenhang zu verstehen, dass das Ausgangsmaterial im Wesentlichen "biologischen oder organischen Ursprungs" ist. Der Begriff umfasst also keine Materialien, die chemisch-synthetischer Herkunft sind. Insbesondere umfasst der Begriff somit Ausgangsmaterialien, die im Wesentlichen von Pflanzen, Tieren oder Mikroorganismen gebildet werden.

Allerdings kann auch zur Gewinnung von hochwertigen Pyrolyseölen nicht biogenes Material eingesetzt werden, wobei ein Vorteil des erfindungsgemäßen Verfahrens auch dann zum Tragen kommt, wenn diese Ausgangsmaterialien säurehaltig sind bzw. in der Pyrolyse Säure bildende Bestandteile enthalten, da durch die Nachkonditionierung des erfindungsgemäßen Verfahrens der Säuregehalt des Pyrolyseöls deutlich vermindert werden kann.

Als biogene Ausgangsmaterialien können nicht nur die im Stand der Technik bereits genannten Gärreste (insbesondere aus Biogas- und Bioethanol-Verfahren)sondern auch andere biogene Ausgangsmaterialien eingesetzt werden, zumal beim Einsatz von Gärresten üblicherweise sehr hohe Wassergehalte im Pyrolyseöl auftreten, die vermutlich auf einen hohen Anteil an Oxoverbindungen im Pyrolyseöl zurückzuführen sind. Als "andere biogene Ausgangsmaterialien" sind insbesondere zu nennen: cellulosehaltige Materialien (insbesondere Holzreste, landwirtschaftliche Reststoffe und Stroh), industrielle Biomassereststoffe (insbesondere Gärreste, Biertreber, Traubentrester Oliventrester, Nussschalen oder Kaffeereste), Altfette und für den Verzehr und die Futtermittelherstellung nicht freigegebene Tierfette, Schlempen aus dem Papierrecycling sowie Gülle-haltige Materialien und Klärschlämme. Es versteht sich von selbst, dass auch Gemische dieser Materialien untereinander als Ausgangsmaterial eingesetzt werden können oder Gemische der genannten Materialien mit weiteren biogenen Stoffen, mit Gärresten oder mit nicht biogenen Stoffen. Daneben können aber auch untrennbare Gemische aus biogenen und nichtbiogenen Materialien eingesetzt werden, wie dies beispielsweise im Fall von benutzten Babywindeln oder beim Papierrecycling anfallenden Spuckstoffen der Fall ist. Schließlich können als Ausgangsmaterialien, die meist nicht als biogen zu bezeichnen sind, auch Polymere eingesetzt werden. Zu nennen sind hier insbesondere Polyacrylate, Polyurethane, Polyester, Polyolefine und Kautschuk (wie er beispielsweise in großen Mengen in Form von Altreifen anfällt). Auch hier versteht sich von selbst, dass diese Stoffe auch im Gemisch untereinander oder mit anderen Stoffen vorliegen können. Erfindungsgemäß werden allerdings keine halogenhaltigen nicht biogenen Ausgangsmaterialien und insbesondere keine chlorhaltigen nicht biogenen Ausgangsmaterialien eingesetzt. Insbesondere wird man die nicht biogenen Ausgangsmaterialien häufig mit biogenen Ausgangsmaterialien mischen, da dann in jedem Fall "in situ" ein Katalysator erzeugt wird, mit dem die vorteilhaften erfindungsgemäßen Pyrolyseöle gebildet werden.

Gemäß einer weiteren Ausführungsform weist das Ausgangsmaterial einen Aschegehalt von zumindest 0,5 Gew.-%, insbesondere zumindest 5 Gew.-% und häufig zumindest 8 Gew.-% auf. Der Aschegehalt wird hierbei gemäß DIN EN 14775 bestimmt, allerdings bei 815 °C. Es hat sich nämlich herausgestellt, dass mit steigendem Aschegehalt des eingesetzten Ausgangsmaterials auch der Aschegehalt des als Katalysator eingesetzten pyrolysierten Reststoffs steigt. Zu beachten ist, dass die keinen oder zumindest keinen signifikanten Einfluss auf den Aschegehalt des gebildeten Pyrolyseöls hat, der in jedem Fall sehr niedrig ist. Wird nun ein derartiger Katalysator eingesetzt, so wurde wiederum beobachtet, dass (zumindest bei Aschegehalten des Ausgangsmaterials von bis zu 15 Gew.%) mit steigendem Aschegehalt des Katalysators üblicherweise auch die Menge an erzeugtem Wasserstoff (der im gebildeten Pyrolysegas enthalten ist) steigt. Daneben führt ein steigender Aschegehalt im Regelfall aber auch zu einer höheren Qualität des gebildeten Pyrolyseöls, insbesondere was den Säuregehalt des Pyrolyseöls betrifft.

Dementsprechend sind im Nachkonditionierungsschritt B) insbesondere dann Katalysatoren mit einem hohen Aschegehalt sinnvoll, wenn als Ausgangsmaterialien Stoffe eingesetzt werden, die einen erhöhten Gehalt an Säuren aufweisen bzw. bei der Pyrolyse einen erhöhten Anteil von Säuren bilden. Grundsätzlich ist aber auch denkbar, einen Katalysator miteinzusetzen, der aus einem Ausgangsmaterial mit einem Aschegehalt kleiner1 Gew.-% gebildet wurde, beispielsweise wenn Ausgangsmaterialien pyrolysiert und reformiert werden, die auch ohne die Reformierung schon zu Pyrolyseölen mit relativ geringen Säure-Gehalten führen, wie dies beispielsweise bei Papierschlämmen der Fall ist, die nur einen relativ geringen Lignocellulose-Anteil aufweisen.

Der erfindungsgemäß in Verfahrensschritt B) eingesetzte Katalysator muss aber nicht zwangsläufig mit dem Verfahrensschritt A) erzeugt sein. Er kann vielmehr auch einem derartigen Katalysator nachgebildet sein, was die katalytischen Eigenschaften, die insbesondere auch durch den Aschebestandteil hervorgerufen werden können, betrifft. So kann beispielsweise Pyrolysekoks ohne Aschebestandteile auch nachträglich mit den chemischen Verbindungen die im Aschbestandteil enthalten sind versetzt werden, wobei sich der Aschebestandteil auf einen aus einem gegebenen Ausgangsmaterial in dem erfindungsgemäß nach Schritt A) erhaltenen pyrolysierten Feststoff bezieht.

Gemäß einer weiteren Ausführungsform werden die Ausgangsmaterialien so gewählt, dass zumindest eines der folgenden chemischen Elemente enthalten ist: Zink, Eisen, Platin, Rhenium, Chrom, Kupfer, Mangan, Nickel, Titan, Aluminium, Silizium. Dieses Element muss nicht in elementarer Form vorliegen, es kann auch mit ionischer Form vorliegen oder in gebundener Form (beispielsweise als oxidische Verbindung oder in Form eines Komplexes). Derartige Metalle sind beispielsweise in Gülle und dergleichen regelmäßig enthalten, etwa weil sie Spurenelemente darstellen oder in anderer Form dem Stoffkreislauf zugeführt werden, sie können aber aufgrund der spezifischen Herstellungsbedingungen, in denen bestimmte Abfallstoffe erhalten wurden, in die Abfallstoffe eingetragen sein, beispielsweise Kupfer aus Kupferkesseln. Erfindungsgemäß wurde erkannt, dass insbesondere bei den vorstehenden Metallen eine hervorragende katalytische Wirkung des festen Pyrolyseprodukts als Katalysator erfolgt. Um dies zu gewährleisten, kann Biomasse, die diese Metalle nicht enthält, auch Biomasse mit hohen Metallanteilen, beispielsweise Gülle, zugesetzt werden, um eine besonders effiziente Verfahrensführung zu gewährleisten. Daneben kann aber auch - insbesondere aus Abfallmaterialien (und hier wiederum nicht biologischen Abfallmaterialien) das Metall in kleinen Mengen dem Ausgangsmaterial zugesetzt werden.

Gemäß einer Ausführungsform wird als Ausgangsmaterial ein Material mit einem Feuchtegehalt größer 10 Gew.-% eingesetzt. Es ist sogar möglich, Material mit einem Feuchtegehalt von bis zu 25 Gew.-% einzusetzen; auch Material mit einem Feuchtegehalt von bis zu 40 Gew.-% kann verwendet werden. Das erfindungsgemäße Verfahren liefert aber so viel werthaltige Pyrolyseprodukte, dass zusätzlich zu einem Betrieb der Heizmittel der erfindungsgemäßen Anlage durch thermische Nutzung der Pyrolyseprodukte eine Vortrocknung von feuchteren Ausgangsmaterialien möglich ist. Die hohen Wassergehalte sind erfindungsgemäß möglich, da im Rahmen der verwendeten mittleren Pyrolyse insbesondere durch die homogene und heterogene Wassergas-Shiftreaktion sowie das Steam Reforming Wasser aus dem Einsatzstoff verbraucht und Wasserstoff gebildet werden kann. Das erfindungsgemäße Verfahren zeichnet sich nun im Regelfall insbesondere dadurch aus, dass durch die katalytische Wirksamkeit der festen Pyrolyseprodukte eben dieser Wasserstoff in verstärktem Maß gebildet wird. Demnach sind für das erfindungsgemäße Verfahren Ausgangsmaterialien mit deutlich höheren Wasser-Gehalten als nach dem Stand der Technik einsetzbar und sogar höchst sinnvoll. Im Unterschied dazu ist beispielsweise bei der langsamen Pyrolyse eine natürliche Grenze bei 25 Gew.-% Wasser gegeben, bei der Flash-Pyrolyse ist üblicherweise sogar ein Wasser-Gehalt unter 10 Gew.-% bzw. eine ausgeprägte Vortrocknung des Ausgangsmaterials vonnöten.

Da das erfindungsgemäße Verfahren seine besonderen Vorteile dann ausspielen kann, wenn die Säurezahl des gebildeten Pyrolyseöls (verglichen mit einem ohne Reforming erhaltenen Pyrolyseöls) deutlich gesenkt werden kann, wird gemäß einer weiteren Ausführungsform das Ausgangsmaterial so ausgewählt, dass dieses Säuren enthält oder während der Pyrolyse Säuren bildet. Als Säuren sind hier wiederum insbesondere Carbonsäuren zu nennen, die gegenüber anderen organischen Säuren wie phenolischen Säuren üblicherweise deutlich korrosivere Eigenschaften aufweisen. Grundsätzlich kann aber - um zu einem vorteilhaften Pyrolyseöl zu gelangen - ein Ausgangsmaterial bereitgestellt werden, das aus einer eine Mischung verschiedener Stoffe mit verschieden grossem Säuregehalt besteht, um nicht nach Schritt B) doch zu Pyrolyseölen mit verhältnismäßig hohem Säuregehalt zu gelangen, da in Schritt B) die Säurezahl zwar deutlich vermindert wird, denn aber ein Restsäuregehalt verbleibt. Beispielsweise könnte man beispielsweise bei Gärresten und niedrigeren Reformingtemperaturen Papierschlempen oder Polyolefine zusetzen, die üblicherweise nur sehr geringe Säuregehalte aufweisen.

Gemäß einer weiteren Ausführungsform weist das Ausgangsmaterial einen Lignocellulose-Anteil auf. Dieser Lignocellulose-Anteil kann im erfindungsgemäßen Verfahren sogar bis zu 100 % betragen, da die gebildeten Säuren im Wesentlichen nurintermediär vorliegen. Ist Lignocellulose im Ausgangsmaterial enthalten, so kann dessen Anteil am biogenen Anteil des Ausgangsmaterials, häufig aber am gesamten Ausgangsmaterials mehr als 5 Gew.-%, insbesondere mehr als 10 Gew.-% betragen. Da Lignocellulose während der Pyrolyse in Schritt A )zu starker Säurebildung führt, kann nach dem Verfahren mit dem Stand der Technik bei höheren Lignocellulose-Anteilen üblicherweise kein für Kraftfahrzeuge als Treibstoff geeignetes Pyrolyseöl erhalten werden. Beim vorliegenden Verfahren ist dies anders: Hier werden in jedem Fall erfindungsgemäß bei Lignocellulose-Anteilen größer 15 Gew.-% und insbesondere auch bei Anteilen größer 30 Gew.-% sehr gute Pyrolyseöle womit nach dem Stand der Technik für die oben genannten Zwecke unbrauchbare Pyrolyseöle erhalten werden.

Die Pyrolyse im Schritt A) kann, wie ausgeführt, mit einer Reihe unterschiedlichster Pyrolyseverfahren durchgeführt werden. Um eine besonders hohe Ausbeute an Pyrolyseöl zu erhalten, sollte aber die Pyrolyse so durchgeführt werden, dass ein Cracken der organischen Ausgangsmaterialien in möglichst kleine Bruchstücke erfolgt, da besonders langkettige Bruchstücke zur Teerbildung führen und kleine Bruchstücke eine Verminderung der Viskosität des Pyrolyseöls verursachen können. Gemäß einer Ausführungsform kann daher die Pyrolyse so erfolgen, dass das die Pyrolysezone durchwandernde Material kontinuierlich durch Rückführungsmittel in den der Nachkonditionierungszone abgewandten Bereich der Pyrolysezone zurückgeführt wird. Hierbei erfolgt dann bereits in der Pyrolysezone bis zu einem gewissen Grad - allerdings aber bei im Regelfall niedrigeren Temperaturen als Schritt B) der vorliegenden Anmeldung - eine katalytische Behandlung des pyrolysierten Materials, insbesondere in Form von Crack-Prozessen. Derartige Crack-Prozesse führen zu einer verminderten Viskosität des gebildeten Pyrolyseöls. Die Rückführungsmittel können dabei insbesondere rückmischende Schneckenelemente, gegenläufige Schneckenelemente oder Rückführungsstäbe auf der Reaktorwandung der Pyrolysezone oder Rückführungshaken und dergleichen sein. Wesentlich ist hierbei insbesondere, dass mit diesen Rückführungsmitteln eine "Gegenförderbewegung" realisierbar ist, sodass entweder ein Teilstrom der in der Pyrolysezone vorliegenden Materialströme stetig stromaufwärts geführt werden kann oder dass in einem Betrieb mit zwei Betriebszuständen zumindest in einem der beiden Betriebszustände ein stromaufwärtiger Transport des Pyrolyseproduktestroms realisierbar ist. Eine detailliertere Erläuterung, wie das die Pyrolysezone durchwandernde Material kontinuierlich durch Rückführungsmittel in den der Nachkonditionierungszone abgewandten Bereich der Pyrolysezone zurückgeführt werden kann erfolgt in der WO 2015/158732 A1. Auf die dort beschriebenen Merkmale der Rückführungsmittel und der Pyrolysezone wird hiermit vollumfänglich Bezug genommen.

Erfindungsgemäß wird Verfahrensschritt B) derart durchgeführt, dass die Verweilzeit der Pyrolysedämpfe in der Nachkonditionierungszone 1 bis 20 Sekunden beträgt. Die Verweilzeit in der Nachkonditionierungszone wird hierbei wiederum mittels eines Referenzverfahrens bestimmt, wobei als zu reformieren-der "Pyrolysedampf" eingefärbter Dampf Verwendung findet. Die Verweilzeit (genauer gesagt mittlere Verweilzeit) ist dann die Zeit, die zwischen Eintritt in die Katalysator-schüttung und Austritt am Ende der Katalysatorschüttung vergeht, bis sich am Ende der Katalysatorschüttung eine Färbung des austretenden Gases eingestellt hat, die einer Konzentration entspricht, die halb so groß ist, wie die des der Katalysatorschüttung zugeführten eingefärbten Gases.

Die untere Grenze für die Verweilzeiten ist insbesondere deshalb relevant, weil ansonsten kein ausreichendes Reforming erfolgt. Sind dagegen die Verweilzeiten zu lange, so erfolgt ein zu weit gehendes Cracken der in den Pyrolysedämpfen enthaltenen Materialien, so dass letztlich zwar ein nochmals erhöhter Wasserstoff-Gehalt des Produktspektrums aber nur noch eine geringe Ausbeute an Pyrolyseöl erzielt wird. Zusätzlich bilden sich insbesondere bei Verweilzeiten von mehr als 120 Sekunden und meist auch schon bei mehr als 60 Sekunden (insbesondere, wenn gleichzeitig die einer Temperatur des Nachkonditionierungsschritts von mehr als 600 °C gewählt wird) höhere polyzyklische aromatische Kohlenwasserstoffe (PAK), welche neben ihrer Toxizität die Bildung von Ruß in Dieselmotoren begünstigen und daher unerwünscht sind. Bei Verweilzeiten von 5 bis 20 Sekunden wird die Bildung von PAK weitestgehend unterdrückt und man erhält gleichzeitig eine sehr große Ausbeute an Pyrolyseölen mit sehr hoher Qualität.

Durch die gezielte Temperaturführung und die gezielte Wahl der Verweilzeit der Pyrolysedämpfe im Reformierungsschritt, insbesondere wie sie im vorstehenden Absatz beschrieben ist, kann somit eine gezielte Bildung von erwünschten Produktverbindungen erfolgen. Insbesondere die Temperaturführung wird hierbei auf die jeweilige Biomasse angepasst. Beispielsweise haben sich bei den eingesetzten Papierschlämmen eher niedrige Temperaturen im Bereich von 500 °C und bei den eingesetzten Oliventrestern eher höhere Temperaturen im Bereich von 700 °C als besonders geeignet erwiesen. Generell wird durch die Reformierung die Konzentration von Oxoverbindungen und von polaren Verbindungen, wie z.B. Aldehyden und Ketonen, deutlich reduziert. Durch die geringere Menge an Oxoverbindungen wird in der Regel auch die Löslichkeit von Wasser im nach der Reformierung erhaltenen Pyrolyseöl sowie auch die Löslichkeit von Komponenten dieses Pyrolyseöls in Wasser vermindert. Hierdurch wird eine verbesserte Trennung von wässriger und öliger Phase der nach der Reformierung erhaltenen Flüssigprodukte ermöglicht. Zudem ist ein hoher Sauerstoffgehalt bzw. hoher Gehalt an Oxoverbindungen im Pyrolyseöl negativ, da mit Organik verunreinigtes Prozesswasser teuer zu entsorgen ist und auch die Ausbeute an Pyrolyseöl vermindert wird.

Erfindungsgemäß wurde beobachtet, dass bei einer Nachkonditionierung bei etwa 500 °C dominant Alkane und Alkene gebildet werden. Durch eine Erhöhung der Temperatur auf zumindest 600 °C und insbesondere auf über 700 °C werden weniger Alkane und Alkene gebildet, wogegen sich im Regelfall vermehrt aromatische Kohlenwasserstoffe wie Alkylbenzole, Naphthaline, Styrole und Indole bilden. Die Wahl einer Reformierungstemperatur von mehr als 600 °C beziehungsweise von mehr als 700 °C ist daher auch dann sinnvoll wenn die gebildeten Pyroylseöle in oder als Kraftstoffe(n) Verwendung finden. Aromatische Kohlenwasserstoffe und hier insbesondere Alkylbenzole sind als Antiklopfmittel in Ottokraftstoffen erwünscht. Alkylbenzole dienen hierbei als nicht toxisches Benzolsubstitut. Naphthaline und Indole sind ebenfalls kommerzielle Kraftstoffadditive und beeinflussen die Kraftstoffqualität positiv.

Gemäß einer üblichen Ausführungsform erfolgt sowohl die Pyrolyse als auch die Reformierung im Wesentlichen bei Normaldruck (1013 hPa). Der Druck kann aber auch darüber liegen, beispielsweise bei mehr als 200 hPa darüber oder sogar mehr als 1000 hPa darüber. Im Einzelfall können sogar Drücke vorliegen, die noch deutlich höher sind. Der Druck kann in den unterschiedlichen Bereichen allerdings auch unterschiedlich hoch ausgebildet sein, beispielsweise um einen Vorschub innerhalb des Reaktors steuern zu können. Ferner kann die Trennung der Pyrolyseprodukte bei höherem Druck erfolgen, sodass Kohlenwasserstoffe und andere organische Produkte bereits aufgrund der Druckführung vom ebenfalls gebildeten Wasserstoff, Kohlendioxid und Kohlenmonoxid abtrennbar sind.

Erfindungsgemäß beträgt in Schritt B) die Verweilzeit des Katalysators in der Nachkonditionierungszone 10 Minuten bis 6 Stunden. Typischerweise beträgt die Verweilzeit etwa 30 Minuten bis 5 Stunden. Insbesondere wird als Katalysator hierbei ein Katalysator eingesetzt, der noch nicht für die anmeldungsgemäße Nachkonditionierung Verwendung gefunden hat. Erfindungsgemäß geeignet ist hierfür frischer in Schritt A) gebildeter Katalysator, der auch unmittelbar nach der Bildung in Schritt A) für den Reforming-Schritt verwendet werden kann.

Häufig wird hierbei das Verfahren so durchgeführt werden, dass zunächst mittels des Pyrolyseschrittes gebildeter pyrolysierter Feststoff vollständig der Reformierungszone zugeführt wird, d.h. vollständig für Schritt B) eingesetzt wird. Die im vorstehenden Absatz definierte Verweilzeit ist also so definiert, dass sie auf eine vollständige Verwendung des Feststoffs als Katalysator in Schritt B) und die vollständig mit diesem Katalysator kontaktierten in Schritt A) gebildeten Pyrolysedämpfe bezogen ist. Die Verweilzeit ist zwar im Grundsatz von der Menge zugeführten Ausgangsmaterials und der Dauer des Pyrolyseschrittes und den aus dem Ausgangsmaterial gebildeten Pyroylsedämpfen und dem Reformer neu zugeführten pyrolysierten Feststoffen unabhängig. Dennoch soll nachfolgend ein genereller Wert für die Verweilzeit bezogen auf die Pyrolysedämpfe angegeben werden, zumal dieser auch dann anwendbar ist, wenn der pyrolysierte Feststoff nicht vollständig der Reformierungszone zugeführt wird. Die oben angegebenen Werte beziehen sich dann auf einen Durchsatz von etwa 3000 Liter Pyrolysedampf pro Liter Katalysator und Stunde.

Die untere Grenze von 10 bzw. 30 Minuten für die Verweilzeit des Katalysators in der Nachkonditionierungszone wurde gewählt, da für die meisten Ausgangsmaterialien ab 10 Minuten eine signifikante Wirkung des Katalysators zu beobachten ist. Über die Zeit verliert der kontinuierlich mit den Pyrolysedämpfen kontaktierte pyrolysierte Feststoff an Aktivität. Ohne hierauf beschränkt werden zu wollen, wird dies wissenschaftlich damit erklärt, dass (aufgrund der auf der Feststoffoberfläche erfolgenden Reaktion der Pyrolysedämpfe) bei der Pyrolyse gebildete Mesoporen im Reformierungsschritt zu Makroporen anwachsen sowie durch die Reformierung die Feststoffoberfläche verkokt, wodurch sich die reaktive Oberfläche deutlich verringert. Im Regelfall ist der Pyrolysefeststoff daher als Verbrauchskatalysator anzusehen, welcher nur innerhalb einer gewissen Verweilzeit eine hohe Aktivität zur Verfügung stellt. Die vorstehend genannte obere Grenze für die Verweilzeit des Katalysators ist daher dessen abnehmender Aktivität geschuldet. Generell ist allerdings zu beachten, dass die konkret einzustellende Verweilzeit eine deutliche Abhängigkeiten von der für den verwendeten Katalysator eingesetzten Biomasse, der Temperaturführung der Reformierung und der Menge der zu reformierenden Dämpfe, welche den Katalysator durchströmen, besitzen, so dass die vorstehend angegeben Werte eine relativ großen Zeitspanne umfassen.

Bei einem kontinuierlich durchgeführten Reformierungsschritt B) wird die Verweilzeit auch durch die maximale Füllhöhe des Reformierungsreaktors beeinflusst. Üblicherweise wird - um die Aktivität des Katalysators möglichst weitgehend auszuschöpfen - ein möglichst großer Füllgrad realisiert werden (eine Füllung von mindestens 50% dürfte dabei sinnvoll sein); im kontinuierlichen Betrieb werden dann nach Erreichen des gewünschten Füllgrads in dem Ausmaß, wie pyrolysierter Feststoff der Reformierungszone zugeführt wird, verbrauchter Reformierungskatalysator aus der Reformierungszone ausgetragen. Um eine möglichst effiziente Kontaktierung der Pyrolysedämpfe zu ermöglichen, werden anmeldungsgemäß die in Schritt A) gebildeten Pyrolysedämpfe der Nachkonditionierungszone so zugeführt, dass der Volumenstrom der Pyrolysedämpfe im Wesentlichen vollständig durch in der Katalysatorschüttung vorliegende Strömungspfade geführt wird. Die Reformierungszone ist also derart ausgebildet, dass die Pyrolysedämpfe die Katalysatorschüttung nicht nur überstreichen sondern sie vollständig durchdringen müssen. Erfindungsgemäß ist dabei die Katalysatorschüttung so in der Nachkonditionierungs zone angeordnet, dass ein senkrecht zur Strömungsrichtung angeordneter Querschnittsbereich der Nachkonditionierungszone in im Wesentlichen vollständig mit der Katalysatorschüttung gefüllt vorliegt. Dementsprechend sind die vorstehend angegeben Verweilzeiten der Pyrolysedämpfe in der Reformierungs- beziehungsweise Nachkonditionierungszone auch an einer derartigen vollständigen Füllung orientiert angegeben. Die hierfür zugrunde gelegte Geometrie des Reformierungsreaktors beziehungsweise der Reformierungszone orientiert sich hierbei an den üblichen Richtlinien für den Behälterbau, so dass im Regelfall ein Länge:Durchmesser-Verhältnis von 0,5 bis 15 realisiert sein wird.

Erfindungsgemäß wird der Volumenstrom der Pyrolysedämpfe zudem so durch die Katalysatorschüttung geführt, dass die Pyrolysedämpfe mit dem am längsten in der Reformierungszone enthaltenen Katalysator auch erst am Ende des Verfahrensschritts B) in Kontakt kommen. Die Pyrolysedämpfe werden also zunächst mit dem Feststoff kontaktiert, der der Pyrolysezone soeben zugeführt wurde und nach der vorstehend erläuterten Theorie auch die höchste Aktivität aufweisen sollte. Nach und nach werden die Pyrolysedämpfe dann mit katalytisch zunehmend weniger aktiveren Feststoffen kontaktiert bis zuletzt auch eine Kontaktierung mit Feststoffen, die kurz vor dem Austrag stehen, erfolgt. Allein schon aus ökonomischen Gründen wird man für den frisch zugeführten Katalysator häufig soeben frisch in Schritt A) gebildeten pyrolysierten Feststoff zuführen. Zumindest bei kontinuierlichen Verfahren wird man auch die Zuführung des pyrolysierten Feststoffs bzw. des Reformierungskatalysators zur Reformierungszone im Regelfall kontinuierlich einrichten.

Die vorstehend definierten Aufgaben werden (zumindest teilweise) auch durch die mit dem vorstehend beschriebenen Verfahren erhältlichen Pyrolyseöle gelöst.

Das erfindungsgemäße Pyrolyseöl zeichnet sich durch einen Kohlenstoff-Gehalt größer 75 Gew.-%, einen Wasserstoff-Gehalt von 6 bis 11 Gew.-% und einen Sauerstoffgehalt von 3 bis 9 Gew.-% aus. Ferner besitzt das Pyrolyseöl eine Säurezahl kleiner 15 mg KOH/g sowie einen $^{14}$C-Gehalt von zumindest 0,1 ppT (gemessen nach dem Verfahren von Libby mittels eines Zählrohrs).

Das Öl zeichnet sich also durch einen verhältnismäßig niedrigen Sauerstoffgehalt in Bezug auf den Kohlenstoff-Gehalt und einen relativ hohen Wasserstoff-Gehalt in Bezug auf den Kohlenstoff-Gehalt aus. Ferner ist die Säurezahl verhältnismäßig niedrig. Aufgrund des Einsatzes biogener Ausgangsmaterialien kann auch ein signifikanter Anteil von $^{14}$C-Atomen detektiert werden. Während bei fossilen Ölen der $^{14}$C-Wert 0 oder nahezu 0 ist, liegt der $^{14}$C-Wert bei rein biogenen Ausgangsmaterialien bei ca. 1 ppT. Da die erfindungsgemäßen Pyrolyseöle im Regelfall zu einem signifikanten Anteil aus biogenen Ausgangsmaterialien erhalten wurden, liegt dementsprechend auch ein signifikanter Anteil von $^{14}$C-Atomen vor, der bei Pyrolyseölen, die aus rein biogenen Ausgangsmaterialien erhalten wurden, insbesondere größer 0,8 ppT und häufig auch größer 0,9 ppT ist. Bei Mischungen mit synthetischen Materialien oder bei Zugabe von fossilen Flüssigkeiten in einem Quenchprozess sind die vorstehend genannten Werte von 0,8 und 0,9 ppT entsprechend zu vermindern (wobei sich der Faktor der Verminderung durch den Anteil nicht biogener Materialien am Ausgangsmaterial beziehungsweise an zugegebenen fossilen Flüssigkeiten ergibt).

Bezüglich der erfindungsgemäß angegebenen Gewichtsanteile von Kohlenstoff, Wasserstoff und Sauerstoff sowie anderer chemischer Elemente sei angemerkt, dass sich dieser (sofern nicht explizit anders angegeben) entsprechend den gängigen Messmethoden nur auf das Gewicht der organischen Komponenten des Pyrolyseöls und der Asche beziehen; im Pyrolyseöl enthaltenes Wasser wird dementsprechend nicht berücksichtigt.

Gemäß einer Ausführungsform weist das Pyrolyseöl eine Säurezahl < 10 mg KOH/g, insbesondere eine Säurezahl < 6 mg KOH/g auf. Derartige Pyrolyseöle werden insbesondere dann erhalten, wenn der vorstehend beschriebene Schritt B) bei Temperaturen im Bereich zwischen 600 und 750°C durchgeführt wird, bei denen im Allgemeinen hochwertigere Pyrolyseöle erhalten werden. So belegen etwa auch die Beispiele durchgängig, dass bei Reforming-Temperaturen größer 630°C Säurezahlen kleiner 6 mg KOH/g und üblicherweise sogar kleiner 5 mg KOH/g erzielt werden.

Abhängig vom Ausgangsmaterial des vorstehend beschriebenen Verfahrens kann die Zusammensetzung des Pyrolyseöls hinsichtlich der chemischen Elemente noch näher angegeben werden:
Bei den meisten Ausgangsmaterialien werden Pyrolyseöle erhalten, bei denen der Sauerstoffgehalt des ("wasserfreien") Pyrolyseöls deutlich kleiner als 16 Gew.-% ist. Im Regelfall liegt der Sauerstoffgehalt bei kleiner 8 Gew.-%; lediglich in einem Beispiel (Traubentrester) wurde ein signifikant höherer Sauerstoffwert gemessen. Häufig ist der Sauerstoffgehalt auch kleiner als 5,5 Gew.-%. Das Verhältnis Sauerstoff zu Kohlenstoff (also der Quotient aus Sauerstoffanteil und Kohlenstoffanteil jeweils in Gew.-%) ist üblicherweise kleiner als 0,15 und ist üblicherweise auch kleiner als 0,12. Vielfach ist auch ein Verhältnis kleiner 0,1 festzustellen.

Das Gewichtverhältnis Wasserstoff/Kohlenstoff ist dagegen häufig größer als 0,08, insbesondere größer als 0,10 und oft auch größer als 0,11.

Im Ergebnis kann festgestellt werden, dass die meisten Pyrolyseöle, die mit dem erfindungsgemäßen Verfahren herstellbar sind, einen Kohlenstoff-Gehalt größer 75 Gew.-%, einen Wasserstoff-Gehalt von 6 bis 11 Gew.-% und einen Sauerstoffgehalt von bis zu 9 Gew.-%, häufig von 3 bis 6,5 Gew.-% aufweisen. Ferner beträgt der Stickstoff-Gehalt üblicherweise 1,5 bis 4,5 Gew.-%, der im Fall von Klärschlämmen allerdings auch über 8 Gew.-% liegen kann.

Wie bereits erwähnt, zeichnet sich das Pyrolyseöl üblicherweise auch dadurch aus, dass der Wassergehalt sehr gering ist. Üblicherweise liegt der Wassergehalt kleiner 5 Gew.-% und in den meisten Fällen auch kleiner 3 Gew.-%; häufig wurden sogar Wassergehalte kleiner 2 Gew.-% detektiert. Allerdings werden beim Einsatz von Gärresten und Traubentrester als Ausgangsmaterial deutlich höhere Wassergehalte beobachtet; diese lassen sich allerdings durch ein optimiertes Phasen-Trennungsverfahren noch deutlich reduzieren. Daneben kann ein Wassergehalt von größer 10 Gew.-% oder gar größer 20 % auch durch ein Verfahren wie es technisch bei der Biodieselherstellung oder Rohölförderung eingesetzt wird vermindert werden, und zwar auf die vorstehend genannten Wassergehalte kleiner 5 Gew.-% oder gar kleiner 3 Gew.-%.

Alternativ oder ergänzend zur Radiocarbonmethode kann der biogene Ursprung der Pyrolyseöle auch mittels gaschromatographischer Methoden nachvollzogen werden. In vielen Fällen können eine oder mehrere der folgenden chemischen Verbindungen mittels GC-MS in Mengen von größer 0,1 Gew.-% detektiert werden: 1H-Pyrrol, 1-Methyl-Pyridin, 2,3-Dimethyl-Pyrazin, 2,6-Dimethyl-1H-Indol, Thiophen, 2-Methyl-Thiophen, 3-Methyl-Thiophen. Daneben oder zusätzlich kann auch die Abwesenheit bestimmter Verbindungsklassen herangezogen werden. Wie bereits vorstehend erläutert, treten nach dem Stand der Technik bei Lignocellulose-haltigen Ausgangsmaterialien häufig große Anteile von Zuckern, Guajacolen und dergleichen in den Pyrolyseölen auf. Werden derartige Ausgangsmaterialien bei den erfindungsgemäßen Verfahren eingesetzt, so werden Pyrolyseöle erhalten, bei denen der mittels GC-MS ermittelte Gehalt von Zuckern, Guajacolen (Methoxy-Phenolen) und auch Syringolen (Dimethoxy-Phenolen) jeweils kleiner als 0,1 Gew.-% und üblicherweise auch kleiner als 0,01 Gew.-% ist.

Schließlich weisen die erhaltenen Pyrolyseöle einen relativ hohen Anteil an aromatischen Kohlenwasserstoffen, insbesondere an Benzol, Toluol und Xylolen sowie Derivaten hiervon auf, der üblicherweise größer 5 Gew.-% und meist größer 8 Gew.-%, vielfach auch größer 16 Gew.-% und oft größer 20 Gew.-%ist (mittels GC-MS ermittelt). Der Aromaten-Anteil kann durch die Temperaturführung des Nachbehandlungsschritts beeinflusst werden. Bei geeignet hohen Reformierungstemperaturen und nicht zu langen Verweilzeiten wird wie oben näher erläutert ein signifikanter Anteil an Alkylbenzolen, Naphthalinen, Styrolen und Indolen gebildet. Der Aromaten-Anteil kann ferner in vorteilhafter Weise noch weiter erhöht werden, indem das erhaltene Pyrolyseöl einer Destillation unterworfen wird.

Das Pyrolyseöl umfasst im Regelfall auch polyzyklische aromatische Kohlenwasserstoffe (PAK), deren Anteil insbesondere bei einer Nutzung der Pyrolyseöle als Kraftstoff oder Kraftstoffzusatz nicht zu hoch sein sollte und beispielsweise für Diesel-Kraftstoff nicht über etwa 8 Gew.-% liegen sollte. Bei geeigneter Reaktionsführung kann dieser Grenzwert problemlos eingehalten werden. Durch eine Verweilzeit der Pyrolysedämpfe in der Reformierungszone von maximal 60 s bei 600 °C oder höheren Temperaturen werden im Regelfall PAK-Anteile von weniger als 8 Gew.-% erreicht. In nahezu allen Fällen werden diese Werte bei einer Verweilzeit der Pyrolysedämpfe in der Reformierungszone von maximal 20 s bei Reformierungstemperaturen zwischen 600 °C und 700 °C erreicht. Auch bei längeren Verweilzeiten beträgt der PAK-Anteil üblicherweise maximal 10 bis 15 Gew.-% und kann durch eine Destillation gegebenenfalls vermindert werden.

Schließlich weisen die erfindungsgemäßen Pyrolyseöle auch noch einen hohen Heizwert auf, der - unabhängig von den Ausgangsmaterialien - üblicherweise größer ist als 20 MJ/kg und vielfach auch größer ist als 30 MJ/kg.

Alle vorstehend aufgeführten charakteristischen Kenngrößen beziehen sich (sofern dies nicht explizit anders angegeben ist) auf Pyrolyseöle, die keiner zusätzlichen Nachbehandlung unterworfen wurden, insbesondere keiner katalytischen Hydrierung und keiner Destillation. Die genannten Kenngrößen beziehen sich vielmehr auf Pyrolyseöle, die ausschließlich mittels des näher erläuterten Verfahrensschritts B) nachbehandelt wurden.

Die erfindungsgemäßen Pyrolyseöle zeichnen sich auch dadurch aus, dass sie zu weiten Teilen unzersetzt destillierbar sind. Die Destillierbarkeit wird mittels einer Vakuumdestillation (Glaskolbenaufbau) bei 100 hPa(abs) ermittelt. Das erfindungsgemäße Pyrolyseöl ist dabei zumindest zu 50 Gew.-%, in vielen Fällen zu zumindest 80 Gew.-% unzersetzt destillierbar. Als Rückstand verbleiben bei der Destillation der erfindungsgemäßen Pyrolyseöle Schweröl und Phenoplaste.

Durch eine zusätzliche Destillation wird insbesondere der Sauerstoffgehalt des Pyrolyseöls gesenkt, während das Gewichtverhältnis Wasserstoff/Kohlenstoff nahezu gleich bleibt. Die nach einer zusätzlichen Destillation erhaltenen Pyrolyseöle weisen daher im Regelfall eine Säurezahl < 5 mg KOH/g und (abhängig vom Ausgangsmaterial) einen Sauerstoffgehalt kleiner 8 Gew.-%).

Neben dem Pyrolyseöl wird im Pyrolysegas auch noch ein hoher Wasserstoff-Gehalt detektiert. Dieser Wasserstoff kann dazu verwendet werden, die erfindungsgemäßen Pyrolyseöle noch weiter zu veredeln und diese weiter zu deoxygenieren. Wie bereits vorstehend erwähnt wurde, ist die Bildung von Wasserstoff stark abhängig vom Aschegehalt des gebildeten Katalysators. Bei Aschegehalten von bis zu 10 Gew.-% werden im Pyrolysegas Wasserstoff-Gehalte von im Regelfall zumindest 15 Gew.-%, häufig von 20 bis 35 Gew.-% erhalten. Bei Aschegehalten größer 10 Gew.-% werden im Pyrolysegas Wasserstoff-Gehalte von im Regelfall zumindest 30 Gew.-%, häufig von 35 bis 45 Gew.-% erhalten. Das Wasserstoffgas kann unter anderem zur katalytischen Hydrierung der Pyrolyseöle und damit zur weiteren Veredelung des Pyrolysegases eingesetzt werden.

Eine katalytische Hydrierung der erfindungsgemäßen Pyrolyseöle kann, wie dem Fachmann bekannt ist, insbesondere mittels heterogener Katalyse erfolgen. Besonders gute Ergebnisse werden erzielt, wenn die Hydrierung bei deutlich erhöhtem Druck erfolgt. Durch eine zusätzliche Hydrierung wird insbesondere der Sauerstoffgehalt (und der Gehalt anderer Heteroatome, insbesondere auch der Schwefelgehalt) des Pyrolyseöls sehr stark vermindert, während das Gewichtverhältnis Wasserstoff/Kohlenstoff und der Wasserstoff-Gehalt erhöht wird. Die nach einer (zusätzlichen) Hydrierung erhaltenen Pyrolyseöle weisen daher im Regelfall eine Säurezahl < 0,1 mg KOH/g und einen Sauerstoff-Gehalt kleiner 1 Gew.-% auf. In vielen Fällen ist ferner der Kohlenstoff-Gehalt größer 80 Gew.-%, der Wasserstoff-Gehalt größer 10 Gew.-% und der Schwefel-Gehalt kleiner 0,002 Gew.-%.

Zusammenfassend kann festgestellt werden, dass mit dem erfindungsgemäßen Verfahren erstmalig Pyrolyseöle hergestellt werden können, die einen sehr hohen Heizwert aufweisen, einen niedrigen Wassergehalt, eine niedrige Säurezahl, eine niedrige Viskosität, einen hohen Gehalt an Benzol, Toluol und Xylol, eine hohe thermische Stabilität, einen geringen Sauerstoffgehalt, einen geringen Gehalt an Oligophenolen, eine gute Destillierbarkeit und schließlich - aufgrund des geringen Aschegehalts von üblicherweise kleiner 0,25 Gew.-% (gemessen bei 815°C) und häufig auch von 0,2 Gew.-% oder kleiner - eine geringe Bildung von Aerosolen. Verglichen mit den Pyrolyseölen nach dem Stand der Technik ist Sauerstoff-Gehalt signifikant kleiner. Er liegt bei einem nicht hydrierten erfindungsgemäßen Pyrolyseöl im Bereich hydrierter Pyrolyseöle des Stands der Technik. Hydriert man die erfindungsgemäßen Pyrolyseöle noch zusätzlich, so kann nicht nur der Sauerstoff-Gehalt weiter verringert werden, sondern auch das Wasserstoff/Kohlenstoff-Verhältnis auf einen Wert erhöht werden, der (bei gegebenem Ausgangsmaterial) vom Stand der Technik bislang nicht erreicht wird.

Mit den erfindungsgemäßen Pyrolyseölen können aufgrund ihrer vorteilhaften Eigenschaften daher Motoren betrieben werden, die mit den Pyrolyseölen nach dem Stand der Technik nicht betrieben werden können. Beispielsweise sind hier Blockheizkraftwerke oder Zündstrahlmotoren zu nennen; generell jegliche Motoren, wie sie für Kraftfahrzeuge und dergleichen Verwendung finden. Daneben können die Pyrolyseöle aber auch mit nichtbiogenen Kraftstoffen gemischt werden um zu teilweise aus biogenen Materialien erhaltenen Kraftstoffen zu gelangen.

Eine für das vorstehend beschriebene Verfahren eingesetzte Anlage zur Gewinnung von Pyrolyseöl aus einem Ausgangsma-terial mittels thermokatalytischer Behandlung umfasst zumindest einen Beschickungsbereich für die Zuführung des zu behandelnden Ausgangsmaterials, eine Pyrolysezone, in der aus dem Ausgangsmaterial Pyrolysedämpfe und pyrolysierte Feststoffe gebildet werden und eine Nachkonditionierungszone, in der die Pyrolysedämpfe durch eine Katalysatorschüttung geleitet werden wobei reformierte Pyrolysedämpfe erhalten werden und eine Separationseinheit zur Auftrennung erhaltenen pyrolysierten Materials. In der Nachkonditionierung sind hierbei Mittel vorgesehen, die eine vollständige Durchströmung der Katalysatorschüttung von den Pyrolysedämpfen bewirken.

Weitere Ausgestaltungen der Anlage ergeben sich aus dem vorstehend und nachfolgend näher erläuterten Verfahren.

Nachfolgend wird die Erfindung noch näher anhand eines beispielhaften Verfahrensablaufs beschrieben:
Ein biogenes Ausgangsmaterial wird einem als Schneckenreaktor ausgebildeten Pyrolysereaktor zugeführt. Das Ausgangsmaterial wird dabei auf eine Temperatur von 300 bis 600°C, insbesondere 400 bis 450°C aufgeheizt. Hierbei erfolgt die Pyrolyse, wobei darauf geachtet wird, dass die Pyrolyse unter Abwesenheit von Sauerstoff oder zumindest bei deutlich reduzierter Sauerstoffatmosphäre durchgeführt wird. Die üblichen Verweilzeiten des zu pyrolysierenden Materials im Pyrolysereaktor betragen 3 bis 10 Minuten. Beispielsweise kann als biogenes Ausgangsmaterial Gärrest verwendet werden und 7 Minuten in der Pyrolysezone verbleiben. Die Aufheizung des Materials erfolgt in drei Zonen, wobei in der ersten Zone 200°C erreicht werden (diese zählt also noch nicht zur Pyrolysezone im Sinne der vorliegenden Erfindung, sondern ist als Vorkonditionierungszone zu verstehen), in einer zweiten Zone auf 350°C erwärmt wird und in einer dritten Zone auf 400°C erwärmt wird. Erhalten werden durch die Pyrolyse Pyrolysekoks und Pyrolysedämpfe. In Pyrolysedämpfen sind große Anteile von Carbonsäuren, Syringolen, Guajacolen und Oligophenolen enthalten.

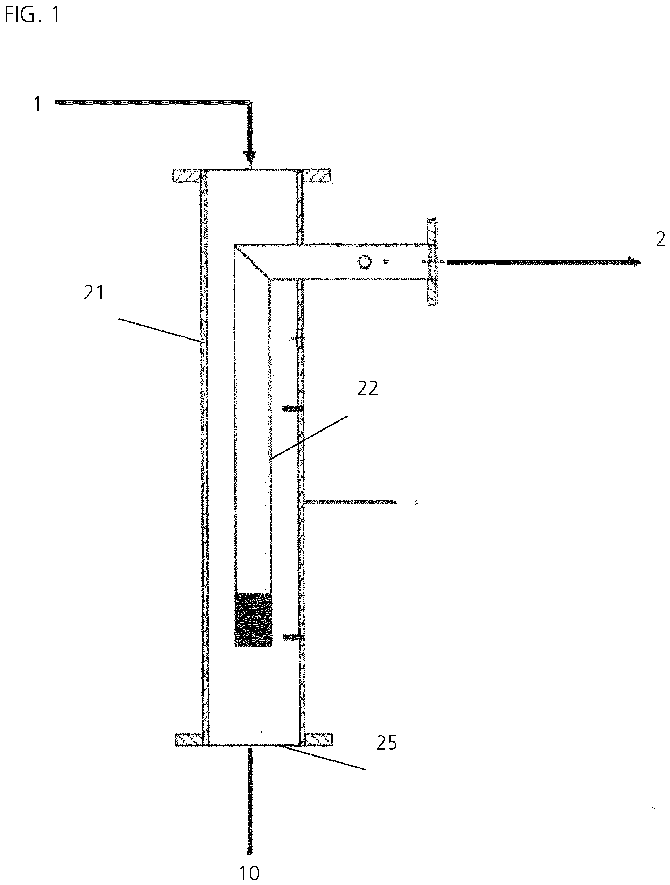

Die im Pyrolyseschritt erhaltenen Materialien werden nun der Nachkonditionierungszone bzw. der Reformierung zugeführt. Dies kann innerhalb eines kontinuierlichen röhrenförmigen Reaktors erfolgen. Es kann aber auch ein separater Reformierungsreaktor verwendet werden. Der Reformierungsschritt kann mittels eines Batch-Reaktors oder mittels eines kontinuierlich arbeitenden Reaktors erfolgen. Der im Pyrolyseschritt gebildete Pyrolysekoks wird also dem Reformierungsteil des Reaktors zugeführt und dort auf 500 bis 800°C erhitzt. Die im Pyrolysereaktor gebildeten Pyrolysedämpfe werden nachfolgend durch die reaktorspezifische Konstruktion durch das heiße Bett aus Pyrolysekoks gesaugt. Die Nachkonditionierungszone kann dabei 7 Liter Fassungsvermögen aufweisen und im Mittel etwa zur Hälfte mit dem Pyrolysekoks beziehungsweise dem Katalysator gefüllt sein, wobei die geometrischen Verhältnisse aus Figur 1 zugrunde gelegt werden. Die Verweilzeit des Pyrolysedampfs beträgt dabei im Regelfall 1 bis 20 Sekunden; die Verweilzeit des Katalysators beträgt im Regelfall 3 bis 4 Stunden. Bei den bereits vorstehend exemplarisch genannten Verfahren unter Verwendung von Gärrest kann der erzeugte Pyrolysekoks im Reformerteil auf 700°C erhitzt werden und eine Verweilzeit der Pyrolysedämpfe im Reformerteil von ca. 5 Sekunden realisiert werden. Im Koksbett werden die Pyrolysedämpfe umgewandelt, wobei Carbonsäure zerstört und Pyrolyseteere gecrackt werden. Ferner werden Syringole und Guajacole zu Benzolkomponenten abgebaut. Das gebildete Pyrolysekondensat bildet spontan eine wässrige und eine organische Phase aus. Die organische Phase wird im Rahmen der vorliegenden Anmeldung als Pyrolyseöl bezeichnet. Für einen kontinuierlichen Prozess, bei dem ständig ein Ausgangsmaterial mit einem hohen Gehalt biogener Inhaltsstoffe verwendet wird, wird der während der Pyrolyse gebildete Pyrolysekoks laufend dem Reformierungsteil des Reaktors zugeführt und der dort enthaltene bereits zur Reformierung verwendete Katalysator ausgetauscht. Wie vorstehend erläutert ist es aber grundsätzlich auch denkbar, den gebildeten Pyrolysekoks längerfristig einzusetzen und nur in längeren Zeitabständen immer wieder auszutauschen. Abschließend erfolgt in einem Separationsschritt die Trennung kondensierbarer und nicht kondensierbarer Anteile; bei den kondensierbaren Anteilen erfolgt wiederum eine Abtrennung des Pyrolyseöls von ebenfalls gebildeter wässriger Phase.

Figur 1 zeigt eine maßstabsgetreue Abbildung eines Reformierungsreaktors, der auch eine Teilzone eines größeren Reaktors bilden kann. Der Reaktor umfasst ein größeres Rohr 21, das vollständig mit dem während der Pyrolyse gebildeten Feststoff beziehungsweise dem Katalysator gefüllt wird. Das Rohr 21 kann beispielsweise einen Innendurchmesser von 20 cm aufweisen. Das Rohr ist am unteren Ende 25 im Regelfall verschlossen. Ist es geöffnet, so kann über dieses Ende verbrauchter Katalysator beziehungsweise Feststoff 10 ausgetragen werden. Innerhalb des Rohres 21 ist ein Innenrohr 22 mit einem deutlich geringeren Durchmesser angeordnet (beispielsweise mit einem Innendurchmesser von 7,5 cm), das am unteren Ende zur Katalysatorschüttung hin geöffnet ist. Dem Reformierungsreaktor werden nun Pyrolysedämpfe 1 und gegebenenfalls feste Pyrolyseprodukte zugeführt. Nachdem Sie durch die im Rohr 21 enthaltene erhitzte Katalysatorschüttung geleitet wurden, werden sie über das untere Ende des Innenrohrs abgeführt; die gebildeten reformierten Pyrolysedämpfe 2 können nun einer weiteren Nachbehandlung oder einer Separationseinheit zugeführt werden.

Soll eine katalytische Hydrierung des gebildeten Pyrolyseöls erfolgen, so wird das Pyrolyseöl einem Hydrierungsreaktor zugeführt, in dem eine Hydrierung unter erhöhtem Druck stattfinden kann. Exemplarisch sei eine Hydrierung mit einem geschwefelten NiMo-Al$_2$O$_2$ Katalysator bei 370 °C und 140 bar Druck genannt, bei der die Katalysatorbelastung (LHSV) 0,3 h$^{-1}$ (30 ml/h) und die Wasserstoffzugabe 1500 l(i.N.) H$_2$/l Pyrolyseöl beträgt. Mit dem vorstehend näher beschriebenen Verfahren werden neben dem Pyrolyseöl (das etwa 10 bis 20 Gew.-% bezogen auf das Ausgangsmaterial ausmacht) auch noch wasserstoffreiches Synthesegas (30 bis 40 Gew.-%), eine wässrige Phase (18 bis 25 Gew.-%) und Pyrolysekoks (20 bis 42 Gew.-%) erhalten.

Tabelle 1 zeigt für verschiedene Ausgangsmaterialien (in Zeile 1 ist in Klammern die Herkunft des Augangsmaterials angegeben) den Wasserstoff-Gehalt der nach Schritt B) erhaltenen nicht kondensierbaren Anteile des Pyrolysedampfs. In Spalte 2 ist der Ascheanteil des im Pyrolyseverfahren erhaltenen Feststoffs angegeben, in den Spalten 3 bis 6 die Anteile an Wasserstoff, Methan, CO und CO$_2$ in Gew.-% (bezogen auf das Gesamtgewicht der nicht kondensierbaren Anteile des Pyrolysedampfs). Daneben können weitere Kohlenwasserstoffe C$_x$H$_y$ enthalten sein. Abweichend von den anmeldungsgemäß verwendeten Messverfahren wurde für Tabelle 1 die Gaszusammensetzung mit einem Gasanalysator basierend auf einem Infrarot-Photometer (CO, CO$_2$, CH$_4$) und einem Wärmeleitfähigkeitsdetektor (H$_2$) gemessen.

Tabelle 1

| Einsatzstoff | Ascheanteil | H$_2$ | CH$_4$ | CO$_2$ | CO |
|---|---|---|---|---|---|
| Holzpellets (Stangenware Baywa) | 0,35 | 17 | 5 | 40 | 10 |
| Gärrest 1 (Firma Loick) | 13,6 | 30-35 | 5-10 | 20-30 | 15-25 |

(fortgesetzt)

| Einsatzstoff | Ascheanteil | $H_2$ | $CH_4$ | $CO_2$ | CO |
|---|---|---|---|---|---|
| Gärrest 1 (Firma Loick) | 17,9 | 35-40 | 1-5 | 20-30 | 15-25 |
| Gärrest 1(Firma Loick) mit Zusatzwasser | 17,9 | 45-50 | 3 | 25-30 | 15 |
| Klärschlamm 1 (E&T Aichaberg GmbH) | 37,9 | 35-37 | 1-2 | 22 | 10 |
| Klärschlamm 2 (E&T Aichaberg GmbH) | 60 | 37-40 | 1-2 | 26-27 | 9 |
| Klärschlamm 3 (E&T Aichaberg GmbH) | > 43 | | | | |
| Stroh (Baywa) | 5,1 | 30-35 | 10-15 | 25-30 | 15-20 |
| Schweinegülle (Laubhof, Hahnbach) | 35,6 | 41-44 | 1-2 | 30-32 | 14 |
| Traubentrester (Riciarelli, Italien) | 5,2 (7,0) | 35-40 | 1-4 | 20-25 | 10-15 |
| Oliventrester (Riciarelli, Italien) | 6,3 | 25-30 | 1-2 | 15-20 | 10-15 |
| Kaffeereste (Barocco, Cafe Zental, Amberg) | 5,1 | 30 | 3 | 23 | 19 |
| Papierschlamm (UPM Ettringen) | 50 | 35 | 1-2 | 14 | 10 |
| Mühlennebenprodukte (Baywa) | 7 | 17-20 | 3 | 17 | 37 |
| Paper Rejects (Smufit Kappa Rejects) | 8,8 | 29 | 0 | 12 | 7 |
| Walnussschalen (Enerblu, Mexiko) | 15,6 | 44 | 2 | 33 | 14 |
| Pferdemist (Hochschule Rosenheim) | 11,2 | 37 | 5 | 32 | 13 |
| Lignin | 17,9 | 32 | 11 | 23 | 15 |
| Municipal Solid Waste (A2A, Italien) | 15 | 36 | 1-2 | 21 | 12 |
| Spuckstoffe (Firma Loick) | 31 | 32 | 2 | 29 | 12 |

Mit dem vorstehend näher erläuterten Verfahren wurden eine ganze Reihe biogener bzw. teilweise biogener Ausgangsmaterialien getestet. Die dabei in der Beschreibung, den Ansprüchen und den Beispielen angegebenen Werte wurden dabei (sofern nicht anders angegeben) stets folgendermaßen bestimmt:

Dichte bei 15°C gemäß DIN EN ISO 12185,
kinetische Viskosität bei 40°C gemäß DIN EN ISO 3104,
Säurezahl gemäß DIN EN 14104,
Flammpunkt gemäß DIN ISO 3679,
Schwefelgehalt gemäß DIN EN ISO 20884,
Phosphorgehalt gemäß DIN EN 14107,
Sauerstoffgehalt gemäß DIN EN 15296 (berechnet);
Kohlenstoff-Gehalt, Wasserstoff-Gehalt und Stickstoff-Gehalt gemäß DIN EN 15104, Brennwert (qV, gr) gemäß DIN EN 14918,
Heizwert (qp, led) gemäß DIN EN 14918,
Aschegehalt gemäß DIN EN 14775, allerdings bei bei 815°C.

Es sei an dieser Stelle nochmals darauf hingewiesen, dass sich (sofern nicht explizit anders angegeben) die Gehalte an Wasserstoff, Sauerstoff, Kohlenstoff, Schwefel und Stickstoff entsprechend den gängigen Messmethoden nur auf das Gewicht der organischen Komponenten des Pyrolyseöls und der Asche beziehen; im Pyrolyseöl enthaltenes Wasser wird dementsprechend nicht berücksichtigt.

Den nachfolgenden Tabellen sind die verschiedenen Analyseergebnisse zu entnehmen. Hierbei zeigt Tabelle 2 für verschiedene Ausgangsmaterialien (in Zeile 1 ist in Klammern die Herkunft des Augangsmaterials angegeben, die Bezeichnung "wie Tab. 1" bedeutet, dass es sich um dasselbe Material wie in Tabelle 1 handelt) bei unterschiedlichen Temperaturen (und in einem Fall ohne einen Nachkonditionierungsschritt) die relevanten Kenngrößen für das erhaltene Pyrolyseöl.

Tabelle 3 zeigt für das aus Klärschlamm bei 700°C erhaltene Pyrolyseöl (vergleiche Tabelle 2, Zeile 2, Spalte 3) die Gewichtsanteile einiger signifikanter darin enthaltener organischer Bestandteile.

Die Tabellen 4 und 5 zeigen für Klärschlamm 3 (aus Tabelle 1) als Ausgangsmaterial den Einfluss der Verweilzeit der Pyrolysedämpfe im Reformierungsreaktor beziehungsweise in der Nachkonditionierungszone. Hierbei ist in Tabelle 5 zu erkennen, dass bei längeren Verweilzeiten die Ausbeute an Pyrolyseöl vermindert wird und das Wasserstoff: Kohlenstoff-Verhältnis verringert wird, was auf die Bildung von polyzyklischen Kohlenwasserstoffverbindungen zurückzuführen sein dürfte. In Tabelle 5 sind die gesamten Produkte (bei vollständiger und kontinuierlicher Verwendung der pyrolysierten Feststoffe als Katalysator) angegeben. Man erkennt, dass bei zu großen Verweilzeiten die Ausbeute an Pyroylseöl deutlich sinkt und im Gegenzug der Gasanteil ansteigt.

Tabelle 6 zeigt die Ausbeuten bei Destillation des erfindungsgemäßen Pyrolyseöls. Hierbei wird - wie vorstehend - erläutert eine Vakuumdestillation bei 100 mbar(abs) mittels eines Glasaufbaus aus Destillierbrücke, Glaskolben und Heizmantel durchgeführt. Als Einsatzsstoffe dienen die Pyrolyseöle, die aus bei 500 °C nachkonditioniertem (reformiertem) Klärschlamm, aus bei 700 °C nachkonditioniertem "Gärrest 1" (vergleiche Tabelle 2, Zeile 1, Spalte 8 und Zeile 2, Spalte 2) sowie aus bei 700 °C nachkonditionierten Holzpellets (Stangenware Baywa).

Tabelle 7 zeigt das Ergebins zusätzlicher Nachkonditionierungsschritte für das Pyrolyseöl, das aus bei 500 °C nachkonditioniertem Klärschlamm erhalten wird (vergleiche Tabelle 2, Zeile 2, Spalte 2). Es zeigt sich, dass sowohl durch eine Hydrierung als auch durch eine Destillation der Anteil der Heteroatome (O, N, S) signifikant reduziert werden kann. Hiermit einher geht auch eine weitere signifikante Verminderung der Säurezahl sowie eine Erhöhung des Heizwerts und der Viskosität.

Das hydrierte Mitteldestillat erfüllt im Wesentlichen die Vorgaben für Dieselkraftstoffe gemäß EN 590 (in Klammern sind jeweils die von der genannten Norm geforderten Werte angegeben):

Cetanzahl: 43 ($\geq$ 51); Cetanindex: 47 ($\geq$ 46); Dichte bei 15 °C: 840 kg/m$^3$ (820 bis 845); Schwefelgehalt: 19,9 mg/kg ($\leq$ 10); Flammpunkt: 86 °C ($\geq$ 55 °C); Aschegehalt: < 0,005 Gew.-% ($\leq$ 0,01); Wassergehalt: 55 mg/kg ($\leq$ 200); Kupferkorrosion: Klasse 1 (Klasse1); Schmierfähigkeit bei 60 °C: 196 $\mu$m ($\leq$ 460 $\mu$m); Viskosität bei 40 °C: 2,855 mm$^2$/s (2 bis 4,5); CFPP: -11 °C (-20 °C bis 0 °C); Volumen bei 250 °C: 54 %V/V (< 65); Volumen bei 350 °C: 92,7 %V/V ($\geq$ 85); 95 %(V/V) Rückstand: 360 °C ($\leq$ 360). Cetanzahl und Schwefelgehalt sind primär von der

Tabelle 2

| Einsatzstoff | Stroh (Baywa) | Traubentrester (wie Tab. 1) | Oliventrester (wie Tab. 1) | Oliventrester (wie Tab. 1) | Gärrest 1 (wie Tab. 1) | Gärrest 1 (wie Tab. 1) | Gärrest 1 (wie Tab. 1) | Gärrest 2 (neue energie steinfurt GmbH) | Gärrest 3 (Italien) |
|---|---|---|---|---|---|---|---|---|---|
| Reformertemperatur /°C | 630 | 700 | 500 | 700 | Kein Reforming | 500 | 700 | 700 | 700 |
| Verweilzeit Pyrol.dämpfe /s | 7 | 5 | 11 | 5 | - | 11 | 5 | 5 | 5 |
| Wassergehalt Gew.-% | 1,0 | 13,6 | 2,0 | 1,2 | 26,6 | 28,4 | 20,5 | 5,0 | 2,2 |
| Asche (815°C) Gew.-% | < 0,05 | 01 | < 0,05 | < 0,05 | 0,4 | 0,2 | 0,1 | 0,2 | < 0,05 |
| H Gew.-% | 9,92 | 7,24 | 10,2 | 7,37 | 5,54 | 5,97 | 5,58 | 7,55 | 8,0 |
| C Gew.-% | 78,0 | 59,7 | 77,5 | 84,4 | 55,1 | 55,8 | 63,2 | 74,2 | 77,6 |
| N Gew.-% | 1,95 | 3,76 | 1,65 | 3,23 | 3,61 | 3,73 | 4,11 | 4,38 | 4,6 |
| O Gew.-% | 8,7 | 15,3 | 8,4 | 3,5 | 7,8 | 5,0 | 5,6 | 7,8 | 7,0 |
| Brennwert: kJ/kg | 38200 | 23900 | 38400 | 36800 | 25200 | 26300 | 28000 | 33200 | |
| Heizwert kJ/kg | 36000 | 22000 | 36100 | 35200 | 23400 | 24300 | 26300 | 31500 | 34000 |
| Schwefel Gew.-% | 0,42 | 0,28 | 0,22 | 0,27 | 0,88 | 0,88 | 0,84 | 0,99 | 0,6 |
| Säurezahl (TAN) mg KOH/g | 4,64 | 4,36 | 12,13 | 2,1 | 23,65 | 8,83 | 5,06 | 2,37 | 2,1 |

| Einsatzstoff | Klär-schlamm 1 (wie Tab. 1) | Klärschlamm 1 (wie Tab. 1) | Papierschlamm (wie Tab. 1) | Papierschlamm (wie Tab. 1) | Paper Rejects (wie Tab. 1) | Spuckstoffe (wie Tab. 1) | Municipal Solid Waste (wie Tab. 1) | Baby Wipes |
|---|---|---|---|---|---|---|---|---|
| Reformertemperatur /°C | 500 | 700 | 500 | 700 | 700 | 700 | 700 | 700 |
| Verweilzeit Pyrol.dämpfe /s | 11 | 5 | 11 | 5 | 5 | 5 | 5 | 5 |

(fortgesetzt)

| Einsatzstoff | Klär-schlamm 1 (wie Tab. 1) | Klärschlamm 1 (wie Tab. 1) | Papierschlamm (wie Tab. 1) | Papierschlamm (wie Tab. 1) | Paper Rejects (wie Tab. 1) | Spuckstoffe (wie Tab. 1) | Municipal Solid Waste (wie Tab. 1) | Baby Wipes |
|---|---|---|---|---|---|---|---|---|
| Wassergehalt Gew.-% | 2,45 | 2,7 | 0,7 | 0,6 | 0,2 | 0,35 | 3,2 | 0,1 |
| Asche (815°C) Gew.-% | < 0,05 | 0,2 | 0,1 | 0,2 | 0,1 | < 0,05 | < 0,05 | 0,1 |
| H Gew.-% | 10,0 | 6,89 | 8,99 | 7,95 | 7,86 | 10,4 | 7,28 | 8,11 |
| C Gew.-% | 74,9 | 74,9 | 81,9 | 84,9 | 84,2 | 80,6 | 81,1 | 87,6 |
| N Gew.-% | 5,9 | 8,3 | 1,37 | 1,41 | 0,52 | 1,2 | 1,72 | 0,27 |
| O Gew.-% | 7,3 | 6,1 | 6,8 | 4,8 | 7,0 | 6,4 | 6,5 | 3,8 |
| Brennwert: kJ/kg | 37300 | 34300 | 39200 | 38500 | 40200 |  | 37000 | 39300 |
| Heizwert kJ/kg | 35200 | 32800 | 37300 | 36800 | 38500 | 37100 | 35400 | 37500 |
| Schwefel Gew.-% | 1,2 | 0,99 | 0,29 | 0,2 | 0,13 | 0,2 | 0,23 | 0,78 |
| Säurezahl (TAN) mg KOH/g | 8,33 | 4,45 | 5,81 | 2,15 | 2,44 | 1,2 | 6,14 | 1,58 |

Tabelle 3

| | |
|---|---|
| Säuren | 0.00% |
| Wasser | 1.7% |
| nicht aromatische Ketone | 1.2% |
| Benzol, Toluol, Xylole | 8.3% |
| Phenole | 12.9% |
| Phenanthrene | 0.3% |
| Indole | 1.7% |
| Naphthaline | 1.5% |
| Zucker | 0.0% |
| Guajacole (Methoxyphenole) | 0.0% |
| Syringole (Dimethoxyphenole) | 0.0% |

Tabelle 4

| Reformertemperatur | 700 °C | 700 °C | 500 °C | keine Reformierung |
|---|---|---|---|---|
| Verweilzeit der Pyrolysedämpfe | 8 Sekunden | 150 Sekunden | 8 Sekunden | - |
| Eigenschaften des | Pyrolyseöls | | | |
| Wassergehalt (Gew.-%) | 1,4 | 1,6 | 2,6 | 7,7 |
| TAN (mg KOH/g) | 3,2 | 2,8 | 8,4 | 19,7 |
| C Gew.-% | 79,92 | 80,40 | 76,05 | 68,08 |
| H Gew.-% | 8,95 | 7,43 | 9,29 | 9,86 |
| N Gew.-% | 6,51 | 7,98 | 7,33 | 6,10 |
| O Gew.-% | 2,72 | 1,86 | 4,15 | 7,25 |
| S Gew.-% | 0,62 | 0,74 | 0,59 | 1,01 |
| Brennwert: kJ/kg | 38080 | 36550 | 37550 | 34760 |
| Heizwert kJ/kg | 36080 | 34880 | 35450 | 32400 |

Tabelle 5

| Reformertemperatur | Verweilzeit der Pyrolysedämpfe | Pyrolysierter Feststoff | Wässrige Phase | Pyrolyseöl | Gas |
|---|---|---|---|---|---|
| 700 °C | 8 Sekunden | 53 | 17 | 9 | 21 |
| 700 °C | 150 Sekunden | 53 | 18 | 4 | 25 |
| 500 °C | 8 Sekunden | 55 | 23 | 11 | 11 |
| keine Reformierung | - | 63 | 21 | 9 | 7 |

Tabelle 6

| Einsatzstoff | Temperaturbereich bei 100 mbar(abs) | Ausbeute (Destillat) | Rückstand (Schweröl) |
|---|---|---|---|
| Gärrest 1 | 20 - 280 °C | 81 Masse-% | 19 Masse-% |
| Klärschlamm | 20 - 280 °C | 85 Masse-% | 15 Masse-% |

(fortgesetzt)

| Einsatzstoff | Temperaturbereich bei 100 mbar(abs) | Ausbeute (Destillat) | Rückstand (Schweröl) |
|---|---|---|---|
| Holzpellets | 20 - 280 °C | 81 Masse-% | 19 Masse-% |

Tabelle 7

| Einsatzstoff | Klärschlamm | | | | |
|---|---|---|---|---|---|
| Zusätzliche Nachkonditionierung | keine | Destillation | Hydrierung | 1. Hydrierung 2. Destillation | |
| | | | | Leichtsieder < 200 °C | Mitteldestillat > 200 °C |
| Dichte kg/m$^3$ | 960,5 | 911,3 | 811,2 | 731,7 | 840,0 |
| Wassergehalt Gew.-% | 2,45 | 4,81 | 0,0047 | - | 0,0055 |
| Kin. Viskosität mm$^2$/s | 9,26 | 3,00 | 1,46 | 1,46 | 2,85 |
| H Gew.-% | 10,0 | 10,6 | 13,6 | 14,4 | 13,4 |
| C Gew.-% | 74,9 | 77,6 | 86,0 | 85,6 | 85,8 |
| N Gew.-% | 5,9 | 5,6 | < 0,5 | < 0,5 | < 0,5 |
| O Gew.-% | 7,3 | 4,6 | 0,7 | < 0,01 | 0,5 |
| Brennwert: kJ/kg | 37300 | 38085 | 45270 | - | 45162 |
| Heizwert kJ/kg | 35200 | 35820 | 42529 | 43980 | 42319 |
| Schwefel Gew.-% | 1,20 | 0,59 | 0,0015 | 0,0004 | 0,002 |
| Säurezahl (TAN) mg KOH/g | 8,33 | 4,2 | < 0,1 | < 0,1 | < 0,1 |

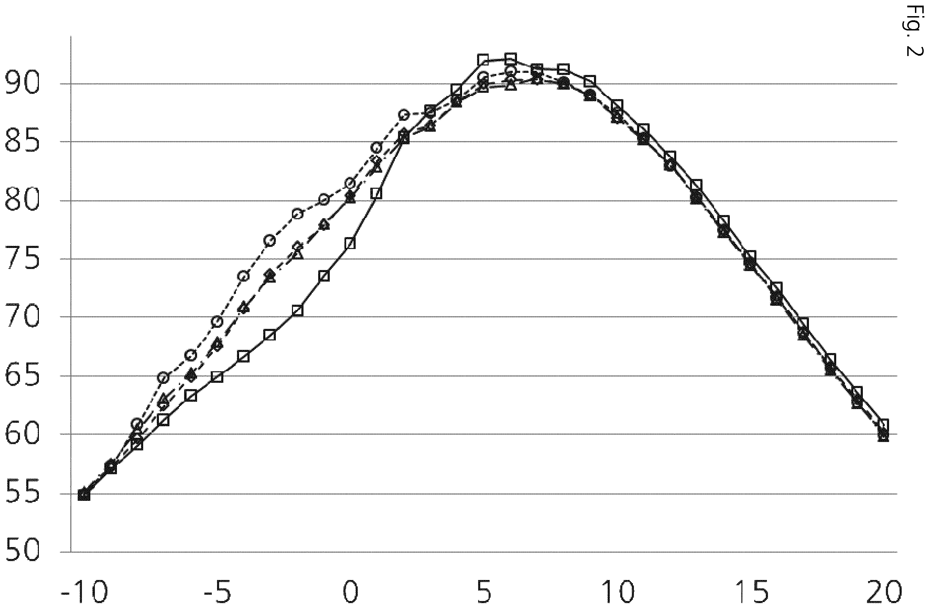

Figur 2 zeigt die Ergebnisse einer Versuchsreihe, mit der die Eignung der die erfindungsgemäßen Pyrolyseöle als Dieselkraftstoff bzw. als Dieselzusatz getestet wurde.

Zu sehen sind die gegen den Kurbelwinkel (-10° bis 20°) aufgetragenen Zylinderdruckverläufe in bar. Eingesetzt wurde als erfindungsgemäßes Pyrolyseöl das nicht hydrierte Öl gemäß Tabelle 2, Zeile 1, Spalte 8 ("Gärrest 1"), das aus einem Gärrest bei 700 °C Reforming-Temperatur erhalten wurde. Ermittelt wurden diese Ergebnisse mit einem Dieselmotor der Marke Kubota Modell V3300. Figur 2 zeigt nun, dass Mischungen aus dem erfindungsgemäßen Pyrolyseöl (PO) mit Rapsmethylester (RME) (Quadrate: 75 % PO - 25 % RME; Rauten: 50% PO - 50% RME; Dreiecke 10 % PO - 90 % RME) ähnlich gute Ergebnisse liefern wie reiner Rapsmethylester (Kreise).

**Patentansprüche**

1.    Verfahren zur Herstellung eines Pyrolyseöls mit folgenden Schritten

A) Pyrolyse eines zu behandelnden Ausgangsmaterials im Wesentlichen unter Abwesenheit von Sauerstoff in einer Pyrolysezone, in der das Ausgangsmaterials auf eine Temperatur von 250 °C bis 700 °C, insbesondere 300 °C bis 600 °C, häufig 400 bis 500 °C, erwärmt wird, wobei die Verweilzeit des zu pyrolysierenden Materials in der Pyrolysezone eine Sekunde bis eine Stunde, insbesondere 5 Sekunden bis 30 Minuten, beispielsweise 3 Minuten bis 10 Minuten, beträgt und pyrolysierte Feststoffe und Pyrolysedämpfe gebildet werden,
B) Nachkonditionierung zumindest der Pyrolysedämpfe in einer Nachkonditionierungszone, in der die Pyrolysedämpfe mit einer Katalysatorschüttung in Kontakt gebracht werden, wobei der Katalysator einen nach Verfahrensschritt A) erhältlichen pyrolysierten Feststoff umfasst oder hieraus besteht, und wobei die Nachkonditionierung bei einer Temperatur von 500 bis 800 °C, insbesondere 600 bis 750 °C, erfolgt und die Verweilzeit der Pyrolysedämpfe in der Nachkonditionierungszone von 1 bis 20 Sekunden beträgt und die Verweilzeit des Katalysators in der Nachkonditionierungszone 10 Minuten bis 6 Stunden beträgt, mit der Maßgabe dass die Temperatur der Nachkonditionierungszone höher ist, als die der Pyrolysezone, und wobei das Pyrolyseöl gebildet wird,

wobei in Schritt B) der frisch gebildete pyrolysierte Feststoff aus der Pyrolysezone kontinuierlich zugeführt wird und die Katalysatorschüttung so in der Nachkonditionierungszone angeordnet ist, dass ein senkrecht zur Strömungsrichtung angeordneter Querschnittsbereich der Nachkonditionierungszone im Wesentlichen vollständig mit der Katalysatorschüttung gefüllt vorliegt und der Volumenstrom der Pyrolysedämpfe so durch die Katalysatorschüttung geführt wird, dass die Pyrolysedämpfe mit dem zuletzt zugeführten Katalysator gleich zu Beginn des Verfahrensschritts B) in Kontakt kommen;

C) Abtrennung des Pyrolyseöls von weiteren gebildeten Pyrolyseprodukten in einer Separationseinheit.

2. Verfahren nach dem vorhergehenden Anspruch,
**dadurch gekennzeichnet, dass**
als Ausgangsmaterial zumindest teilweise ein biogenes Material eingesetzt wird und das Ausgangsmaterial insbesondere ausgewählt ist aus Gärresten, insbesondere aus Biogas- und Bioethanolverfahren, cellulosehaltigenp Materialien, insbesondere Holzresten, landwirtschaftlichen Reststoffen und Stroh, industriellen Biomassereststoffen, insbesondere Gärresten, Biertreber, Traubentrester, Oliventrester, Nussschalen oder Kaffeereste, Altfetten oder Tierfetten, Schlempen aus dem Papierrecycling, Gülle-haltigen Materialien und Klärschlämmen oder Gemischen hiervon.

3. Verfahren nach einem der vorhergehenden Ansprüche,
**dadurch gekennzeichnet, dass**
dass das Ausgangsmaterial ausgewählt ist aus Polymeren, insbesondere aus Polyacrylaten, Polyurethanen, Polyestern, Polyolefinen, Kautschuk oder aus Gemischen der genannten Polymere untereinander oder mit anderen Stoffen.

4. Verfahren nach einem der vorhergehenden Ansprüche,
**dadurch gekennzeichnet, dass**
das Ausgangsmaterial, insbesondere für die Herstellung des in Schritt B) eingesetzten Katalysators, einen Aschegehalt gemäß DIN EN 14775 von zumindest 1 Gew.-%, insbesondere zumindest 5 Gew.-% und häufig von zumindest 8 Gew.-% aufweist.

5. Verfahren nach einem der vorhergehenden Ansprüche,
**dadurch gekennzeichnet, dass**
das Ausgangsmaterial Säuren enthält oder so gewählt ist, dass während der Pyrolyse Säuren gebildet werden und insbesondere Lignocellulose, AcrylatGruppen, Urethan-Gruppen oder Ester-Gruppen enthält.

6. Verfahren nach einem der vorhergehenden Ansprüche,
**dadurch gekennzeichnet, dass**

in Schritt A) die Verweilzeit des zu pyrolysierenden Materials eine Minute bis eine Stunde, insbesondere 5 Minuten bis 15 Minuten, beträgt und,
dass in Schritt A) kontinuierlich oder teilkontinuierlich pyrolysiertes Material direkt in den der Nachkonditionierungszone abgewandten Bereich der Pyrolysezone zurückgeführt wird, wobei zumindest in dem der Nachkonditionierungszone abgewandten Bereich der Pyrolysezone eine Vermischung des pyrolysierten Materials mit dem Ausgangsmaterial erfolgt.

7. Verfahren nach dem vorhergehenden Anspruch,
**dadurch gekennzeichnet, dass**
die Verweilzeit der Pyrolysedämpfe in der Nachkonditionierungszone 1 bis 20 Sekunden beträgt und die Temperatur in Schritt B) zumindest 600°C beträgt.

8. Verfahren nach einem der vorhergehenden Ansprüche,
**dadurch gekennzeichnet, dass**
die Pyrolyseprodukte nach Schritt B) oder Schritt C) einer katalytischen Hydrierung unterworfen werden.

9. Verfahren nach einem der vorhergehenden Ansprüche,
**dadurch gekennzeichnet, dass**
in Schritt C) eine Destillation der erhaltenen Pyrolyseöle stattfindet.

10. Pyrolyseöl, mit einem Kohlenstoff-Gehalt größer 75 Gew.-%, einem Wasserstoff-Gehalt von 6 bis 11 Gew.-% und einem Sauerstoffgehalt von 3 bis 9 Gew.-%, einem mit dem Verfahren von Libby mittels eines Zählrohrs gemessenen $^{14}$C-Gehalt von zumindest 0,1 ppT und einer Säurezahl kleiner 15 mg KOH/g, insbesondere erhältlich mit dem Verfahren nach einem der Ansprüche 1 bis 5.

**11.** Pyrolyseöl nach dem vorhergehenden Anspruch
**dadurch gekennzeichnet, dass**
das Pyrolyseöl einen Aschegehalt aufweist, welcher kleiner als 0,25 Gew.-% ist und gemäß DIN EN 14775 bei 815 °C gemessen wurde.

**12.** Pyrolyseöl nach einem der vorhergehenden Ansprüche,
**dadurch gekennzeichnet, dass**

die Säurezahl kleiner 10 mg KOH/g, insbesondere kleiner 6 mg KOH/g ist
und/oder, dass
der Sauerstoffgehalt kleiner 8 Gew.-%, insbesondere kleiner 5,5 Gew.-%.

**13.** Pyrolyseöl nach einem der vorhergehenden Ansprüche
**dadurch gekennzeichnet, dass**
das Gewichtsverhältnis Wasserstoff/Kohlenstoff größer ist als 0,08, insbesondere größer als 0,10, beispielsweise größer als 0,11 und/oder, dass der Wassergehalt kleiner 5 Gew.-%, insbesondere kleiner 3 Gew.-% und häufig kleiner 2 Gew.-% ist.

**14.** Pyrolyseöl nach einem der vorhergehenden Ansprüche,
**dadurch gekennzeichnet, dass**

zumindest 50 Gew.-%, insbesondere zumindest 80 Gew.-% des Pyrolyseöls unzersetzt destillierbar sind und/oder, dass
zumindest 8 Gew.-%, insbesondere zumindest 16 Gew.-% aromatische Kohlenwasserstoffe enthalten sind.

## Claims

**1.** Method for producing a pyrolysis oil with the following steps

A) pyrolysis of a feedstock to be treated substantially in absence of oxygen in a pyrolysis zone, in which the feedstock is heated to a temperature of 250 °C to 700 °C, in particular, 300 °C to 600 °C, often, 400 to 500 °C, wherein the residence time of the material to be pyrolyzed in the pyrolysis zone is one second to one hour, in particular, 5 seconds to 30 minutes, for example, 3 minutes to 10 minutes, and pyrolyzed solids and pyrolysis vapors are formed,
B) post-conditioning of at least the pyrolysis vapors in a post-conditioning zone, in which the pyrolysis vapors are brought into contact with a catalyst bed, wherein the catalyst comprises a pyrolyzed solid, obtainable according to process step A), or is made thereof, and wherein the post-conditioning is carried out at a temperature of 500 to 800 °C, in particular, 600 to 750 °C, and wherein the residence time of the pyrolysis vapors in the post-conditioning zone is 1 to 20 seconds and wherein the residence time of the catalyst in the post-conditioning zone is 10 minutes to 6 hours with the proviso that the temperature in the post-conditioning zone is higher that the temperature in the pyrolysis zone, and wherein the pyrolysis oil is formed,
wherein in step B) the freshly formed pyrolyzed solids are continuously fed from the pyrolysis zone and wherein the catalyst bed is arranged in the post-conditioning zone in such a way that a cross sectional area of the post-conditioning zone arranged perpendicular to the direction of flow is essentially completely filled with the catalyst bed and wherein the volume flow of the pyrolysis vapors is passed through the catalyst bed in such a way that the pyrolysis vapors come into contact with a last supplied catalyst immediately at the start of step B);
C) separation of the pyrolysis oil from other pyrolysis products that are formed in a separation unit.

**2.** Method according to the preceding claim,
**characterized in that**
the feedstock is an at least partially biogenic material, and the feedstock is selected particularly, from digestates, in particular, from biogas and bioethanol processes, cellulosecontaining materials, in particular, wood waste, agricultural waste and straw, industrial biomass residues, in particular, digestates, brewer's spent grain, grape pomace, olive pomace, nut shells or coffee grounds, spent grease and animal fat, slurries from recycling of paper, manure-containing materials and sewage sludge, or mixtures thereof.

3. Method according one of the preceding claims,
**characterized in that**
the feedstock is selected from polymers, in particular, from polyacrylates, polyurethanes, polyesters, polyolefins, rubber, or from mixtures of said polymers with each other or with other substances.

4. Method according one of the preceding claims,
**characterized in that**
the feedstock, in particular, for the production of the catalyst used in step B), has an ash content in accordance with DIN EN 14775 of at least 1 % by wt., in particular, at least 5 % by wt., and often, 8 % by wt.

5. Method according one of the preceding claims,
**characterized in that**
the feedstock comprises acids or is selected in such a way that, during the pyrolysis, acids are formed and, in particular, comprises lignocellulose, acrylate groups, urethane groups, or ester groups.

6. Method according one of the preceding claims,
**characterized in that**

in step A), the residence time of the material to be pyrolyzed is one minute to one hour, in particular, 5 minutes to 15 minutes, and,
**in that** in the pyrolysis step, continuously or semi-continuously pyrolyzed material is fed back directly into a region of the pyrolysis zone that faces away from the post-conditioning zone, wherein a mixing of the pyrolyzed material with the feedstock is carried out at least in the region of the pyrolysis zone that faces away from the post-conditioning zone.

7. Method according to the preceding claim,
**characterized in that**
the residence time of the pyrolysis vapor in the post-conditioning zone is 1 to 20 seconds and the temperature in step B) is at least 600 °C.

8. Method according one of the preceding claims,
**characterized in that**
the pyrolysis products subsequently to step B) or C) are subjected to a catalytic hydrogenation.

9. Method according one of the preceding claims,
**characterized in that**
in step C) a distillation of the pyrolysis oils takes place.

10. Pyrolysis oil comprising a carbon content greater than 75 % by wt., a hydrogen content from 6 to 11 % by wt. and an oxygen content from 3 to 9 % by wt., a $^{14}$C content of no less than 0.1 parts per trillion measured according to the method by Libby by means of a counter tube and an acid value of less than 15 mg of KOH/g, in particular, obtainable by the method according to one of claims 1 to 5.

11. Pyrolysis oil according to the preceding claim,
**characterized in that**
the pyrolysis oil has an ash content of less than 0,25 % by wt. measured at 815 °C in accordance with DIN EN 14775.

12. Pyrolysis oil according to one of the preceding claims,
**characterized in that**

the acid value is less than 10 mg of KOH/g, in particular, less than 6 mg of KOH/g and/or that
the oxygen content is less than 8 % by wt., in particular, less than 5.5 % by wt.

13. Pyrolysis oil according to one of the preceding claims,
**characterized in that**

the weight ratio of hydrogen/carbon is greater than 0.08, in particular, greater than 0.10, for example, greater than 0.11 and/or **in that**
the water content is less than 5 % by wt., in particular, less than 3 % by wt., and, often, less than 2 % by wt.

**14.** Pyrolysis oil according to one of the preceding claims,
**characterized in that**

at least 50 % by wt., in particular, at least 80 % by wt. of the pyrolysis oil is distillable without decomposition and/or **in that**
no less than 8 % by wt., in particular, no less than 16 % by wt. of aromatic hydrocarbons are comprised.


**Revendications**

**1.** Procédé de production d'une huile de pyrolyse comprenant les étapes suivantes

A) pyrolyse d'une matière première à traiter essentiellement en l'absence d'oxygène dans une zone de pyrolyse dans laquelle la matière première est chauffée à une température de 250 °C à 700 °C, en particulier de 300 °C à 600 °C, fréquemment de 400 °C à 500 °C, le temps de séjour de la matière à pyrolyser dans la zone de pyrolyse étant d'une seconde à une heure, en particulier de 5 secondes à 30 minutes, par exemple de 3 minutes à 10 minutes, et des matières solides pyrolysées et des vapeurs de pyrolyse étant formées,
B) post-conditionnement d'au moins les vapeurs de pyrolyse dans une zone de post-conditionnement dans laquelle les vapeurs de pyrolyse sont mises en contact avec un lit de catalyseur, le catalyseur comprenant ou étant constitué d'une matière solide pyrolysée pouvant être obtenue selon l'étape de procédé A), et le post-conditionnement se déroulant à une température de 500 °C à 800 °C, en particulier de 600 à 750 °C et le temps de séjour des vapeurs de pyrolyse dans la zone de post-conditionnement étant de 1 à 20 secondes et le temps de séjour du catalyseur dans la zone de post-conditionnement étant de 10 minutes à 6 heures, à condition que la température de la zone de post-conditionnement soit plus élevée que celle de la zone de pyrolyse, et l'huile de pyrolyse étant formée,
dans l'étape B), la matière solide pyrolysée fraîchement formée étant introduite de façon continue depuis la zone de pyrolyse et le lit de catalyseur étant agencé dans la zone de post-conditionnement de telle sorte qu'une partie de section transversale, agencée perpendiculairement au sens d'écoulement, de la zone de post-conditionnement soit essentiellement remplie intégralement de lit de catalyseur et que le flux volumique des vapeurs de pyrolyse soit guidé à travers le lit de catalyseur de telle sorte que les vapeurs de pyrolyse viennent en contact avec le catalyseur introduit en dernier dès le début de l'étape de procédé B) ;
C) la séparation, dans une unité de séparation, de l'huile de pyrolyse et d'autres produits de pyrolyse formés.

**2.** Procédé selon la revendication précédente, **caractérisé en ce qu'**une matière biogène est utilisée au moins partiellement comme matière première et **en ce que** la matière première est choisie en particulier parmi les résidus de fermentation, en particulier issus de procédés de biogaz et de bioéthanol, les matières cellulosiques, en particulier des résidus de bois, les résidus agricoles et la paille, les résidus de biomasse industrielle, en particulier les résidus de fermentation, les drêches de bière, le marc de raisin, les grignons d'olive, les coquilles de noix ou le marc de café, les graisses usagées ou les graisses animales, les drêches issues du recyclage du papier, les matières contenant du lisier, et les boues claires ou des mélanges de ceux-ci.

**3.** Procédé selon l'une des revendications précédentes, **caractérisé en ce que** la matière première est choisie parmi les polymères, en particulier parmi les polyacrylates, les polyuréthanes, les polyesters, les polyoléfines, le caoutchouc ou parmi les mélanges de ces polymères entre eux ou avec d'autres substances.

**4.** Procédé selon l'une des revendications précédentes, **caractérisé en ce que** la matière première, en particulier pour la préparation du catalyseur utilisé à l'étape B), présente une teneur en cendres selon DIN EN 14775 d'au moins 1 % en poids, en particulier d'au moins 5 % en poids et fréquemment d'au moins 8 % en poids.

**5.** Procédé selon l'une des revendications précédentes, **caractérisé en ce que** la matière première contient des acides ou est choisie de telle sorte que des acides se forment durant la pyrolyse et contient en particulier de la lignocellulose, des groupes acrylate, des groupes uréthane ou des groupes ester.

**6.** Procédé selon l'une des revendications précédentes, **caractérisé en ce qu'**à l'étape A) le temps de séjour de la matière à pyrolyser est d'une minute à une heure, en particulier de 5 minutes à 15 minutes et **en ce qu'**à l'étape A) la matière pyrolysée de façon continue ou partiellement continue est introduite directement dans la partie de la zone de pyrolyse opposée à la zone de post-conditionnement, un mélange de matière pyrolysée avec la matière première s'effectuant au moins dans la partie de la zone de pyrolyse opposée à la zone de posttraitement.

7. Procédé selon la revendication précédente, **caractérisé en ce que** le temps de séjour des vapeurs de pyrolyse est de 1 à 20 secondes dans la zone de post-conditionnement et la température à l'étape B) est d'au moins 600 °C.

8. Procédé selon l'une des revendications précédentes, **caractérisé en ce que** les produits de pyrolyse selon l'étape B) ou l'étape C) sont soumis à une hydratation catalytique.

9. Procédé selon l'une des revendications précédentes, **caractérisé en ce qu'**à l'étape C), il se produit une distillation des huiles de pyrolyse obtenues.

10. Huile de pyrolyse, ayant une teneur en carbone supérieure à 75 % en poids, une teneur en hydrogène de 6 à 11 % en poids et une teneur en oxygène de 3 à 9 % en poids, une teneur en $^{14}$C, mesurée avec le procédé de Libby à l'aide d'un tube compteur, d'au moins 0,1 ppT et un indice d'acide inférieur à 15 KOH/g, pouvant être obtenue en particulier avec le procédé selon l'une des revendications 1 à 5.

11. Huile de pyrolyse selon la revendication précédente, **caractérisée en ce que** l'huile de pyrolyse présente une teneur en cendres qui est inférieure à 0,25 % en poids et qui a été mesurée selon DIN EN 14775 à 815 °C.

12. Huile de pyrolyse selon l'une des revendications précédentes, **caractérisée en ce que** l'indice d'acide est inférieur à 10 mg de KOH/g, en particulier inférieur à 6 mg de KOH/g et/ou **en ce que** la teneur en oxygène est inférieure à 8 % en poids, en particulier inférieure à 5,5 % en poids.

13. Huile de pyrolyse selon l'une des revendications précédentes, **caractérisée en ce que** le rapport pondéral hydrogène/carbone est supérieur à 0,08, en particulier supérieur à 0,10, par exemple supérieur à 0,11 et/ou **en ce que** la teneur en eau est inférieure à 5 % en poids, en particulier inférieure à 3 % en poids et fréquemment inférieure à 2 % en poids.

14. Huile de pyrolyse selon l'une des revendications précédentes, **caractérisée en ce qu'**au moins 50 % en poids, en particulier au moins 80 % en poids de l'huile de pyrolyse peuvent être distillés non décomposés et/ou **en ce qu'**au moins 8 % en poids, en particulier au moins 16 % en poids, d'hydrocarbures aromatiques peuvent être obtenus.

FIG. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010130988 A1
- WO 2015158732 A1

**In der Beschreibung aufgeführte Nicht-Patentliteratur**

- **S. REN et al.** *RSC Adv,* 2014, vol. 4, 10731
- Tar reduction in pyrolysis vapours from biomass over a hot char bed. **P. GILBERT et al.** Bioresource Technology. Elsevier BV, 01. Dezember 2009, vol. 100, 6045-6051
- **J. NEUMANN et al.** Production and characterization of a new quality pyrolysis oil, char and syngas from digestate - Introducing the thermo-catalytic reforming process. *Journal of Analytical and Applied Pyrolysis, Bd,* 02. Dezember 2014, vol. 113, 137-142